# EUROPÄISCHE PATENTANMELDUNG

(11) **EP 4 560 222 A1**
(43) Veröffentlichungstag der Anmeldung: **28.05.2025**
(21) Anmeldenummer: 24214745.2
(22) Anmeldetag: 22.11.2024
(51) Int. Cl.: F24S 30/425, F24S 40/20, H02S 40/10

(54) **REINIGUNGSVORRICHTUNG**

(30) Priorität: 24.11.2023 DE 102023132822
(71) Anmelder: Jäger, Anton, 89250 Senden (DE)
(72) Erfinder: Jäger, Anton, 89250 Senden (DE)
(74) Vertreter: Manitz Finsterwald Patent- und Rechtsanwaltspartnerschaft mbB

(57) **Zusammenfassung**

Die Erfindung betrifft eine Reinigungsvorrichtung (11) zur Montage an einer Anlage (10) zur Nutzung von Sonnenenergie, insbesondere für eine Solarthermie- oder Photovoltaikanlage, die mehrere über eine gemeinsame Tragkonstruktion (13) zusammenhängende, jeweils eine Moduloberfläche (15) und einen Modulrahmen (17) aufweisende Module (19) umfasst, mit zumindest einem Paar separater, insbesondere baugleicher, Halter (21), die einander gegenüberliegend an der Anlage (10) montierbar sind, einem im Betrieb zwischen den beiden Haltern (21) pendelnden Reinigungsshuttle (23), das ein quer zur Pendelrichtung langgestrecktes Reinigungsorgan (25) umfasst, und einer in Pendelrichtung langgestreckten, im montierten Zustand von den Haltern (21) gehaltenen Führung (27) für das Reinigungsshuttle.

## Beschreibung

Die Erfindung betrifft eine Reinigungsvorrichtung zur Montage an einer Anlage zur Nutzung von Sonnenenergie, insbesondere für eine Solarthermie-Anlage oder für eine Photovoltaikanlage, die mehrere über eine gemeinsame Tragkonstruktion zusammenhängende, jeweils eine Moduloberfläche und einen Modulrahmen aufweisende Module umfasst. Die Erfindung betrifft außerdem eine solche Anlage mit einer oder mehreren Reinigungsvorrichtungen wie hierin offenbart.

Derartige Anlagen besitzen Oberflächen, die im Laufe der Zeit verschmutzen können. Um einer Verringerung des Wirkungsgrades der Anlage entgegenzuwirken, ist eine regelmäßige Reinigung der Moduloberflächen erforderlich. Dies ist grundsätzlich manuell möglich, was aber mit einem hohen Arbeitsaufwand verbunden ist.

Eine Anlage mit selbsttätiger Reinigungsvorrichtung ist beispielsweise aus DE 10 2016 119 978 A1 bekannt. Der Aufwand für Herstellung und Montage dieser Reinigungsvorrichtung ist allerdings vergleichsweise hoch.

Aufgabe der Erfindung ist es, eine Möglichkeit zur selbsttätigen Reinigung einer Anlage der eingangs genannten Art zu schaffen, die bei zuverlässiger Funktionsweise einfach zu montieren ist und geringe Herstellungskosten aufweist.

Die Lösung dieser Aufgabe erfolgt jeweils durch die Merkmale der unabhängigen Ansprüche.

Die erfindungsgemäße Reinigungsvorrichtung umfasst zumindest ein Paar separater, insbesondere baugleicher, Halter, die einander gegenüberliegend an der Anlage montierbar sind, ein im Betrieb zwischen den beiden Haltern pendelndes Reinigungsshuttle, das ein zur Pendelrichtung langgestrecktes Reinigungsorgan umfasst, und eine in Pendelrichtung langgestreckte, im montierten Zustand von den Haltern gehaltene Führung für das Reinigungsshuttle.

Die Erfindung minimiert Herstellungskosten und Montageaufwand bei gleichwohl zuverlässiger Funktionsweise. Die Halter dienen dazu, die Führung für das Reinigungsshuttle so an der Anlage zu halten, dass das sich zwischen den Haltern bewegende und durch die Führung geführte Reinigungsshuttle eine Reinigung der Moduloberflächen durchführen kann.

Wie nachstehend näher ausgeführt wird, kann es sich bei den Haltern beispielsweise um günstig in großer Stückzahl herstellbare, beispielsweise im Spritzgussverfahren produzierbare Kunststoffteile handeln. Unabhängig davon können die Halter im Vergleich zu den Abmessungen der Module klein sein. Die Führung kann ein einziges flexibles Führungsorgan, wie z.B. ein Seil oder einen Draht, umfassen, das zwischen die Halter oder zwischen Halter und Führungsshuttle gespannt ist, um so eine bestimmungsgemäß orientierte Führung für das Reinigungsshuttle an der Anlage bereitzustellen. Das Reinigungsshuttle mit dem sich quer zur Pendelrichtung erstreckenden Reinigungsorgan benötigt nicht mehr als diese Führung und ist abgesehen von dieser Führung frei beweglich. Bei seiner Hin- und Her-Bewegung zwischen den beiden Haltern kann das Reinigungsshuttle aufgrund dieser Beweglichkeit folglich nicht verkanten.

Die erfindungsgemäße Reinigungsvorrichtung zeichnet sich also nicht nur durch eine geringe Anzahl von Bauteilen und durch kostengünstig herstellbare Bauteile aus, sondern auch durch einen sehr einfachen Aufbau und ein denkbar einfaches Funktionsprinzip.

Zudem kann die erfindungsgemäße Reinigungsvorrichtung auch in großer Stückzahl durch schnell anlernbares Personal rasch montiert werden und eignet sich daher sowohl für kleine als auch für vergleichsweise große Anlagen, die viele Modulreihen aus jeweils einer Vielzahl von nebeneinander angeordneten Modulen aufweisen.

Weitere mögliche Ausgestaltungen der Erfindung sind auch in den abhängigen Ansprüchen, der Beschreibung sowie der Zeichnung angegeben.

Gemäß einer Variante kann die Führung zumindest ein langgestrecktes Führungsorgan umfassen, das sich im montierten Zustand durchgehend von dem einen Halter zum anderen Halter erstreckt, wobei sich das Reinigungsshuttle im Betrieb relativ zu dem Führungsorgan bewegt. Beispielsweise kann sich das Reinigungsshuttle wie ein Schlitten oder eine Seilbahn entlang des Führungsorgans bewegen und dabei von diesem geführt werden.

Das Führungsorgan kann im montierten Zustand zwischen die Halter gespannt sein. Vorzugsweise ist das Führungsorgan flexibel, beispielsweise ein Seil oder ein Draht. Ein Seil oder Draht kann schnell und einfach zwischen die beiden Halter gespannt werden, nachdem diese an der Anlage montiert worden sind. Grundsätzlich kann das Führungsorgan auch starr und beispielsweise als Stange ausgebildet sein. Auch ein starres Führungsorgan kann zwischen die an der Anlage montierten Halter gespannt werden.

Vorzugsweise ist lediglich ein einziges Führungsorgan vorgesehen, das insbesondere mittig bezüglich der Längserstreckung des Reinigungsorgans des Reinigungsshuttle angeordnet ist. Alternativ können auch mehrere Führungsorgane vorgesehen sein, die parallel zueinander verlaufen, wobei diese so nahe beieinander angeordnet sind, dass zu einem Verkanten des Reinigungsshuttle neigende Mehrfachführungen mit zu großem Abstand voneinander vermieden werden.

Wenn das Führungsorgan im montierten Zustand zwischen die Halter gespannt ist, dann ist bei einem flexiblen Führungsorgan wie z.B. einem Seil sichergestellt, dass das Führungsorgan ausreichend straff ist. Zudem sind hierdurch die Halter mittels des Führungsorgans aufeinander zu gespannt, was die Halter zusätzlich im montierten Zustand sichert.

Das Reinigungsshuttle kann im Betrieb entlang des Führungsorgans rollen oder gleiten. Hierfür kann das Reinigungsorgan zumindest ein Rollelement oder wenigstens ein Gleitelement umfassen. Auch Kombinationen von Roll- und Gleitelementen sind möglich. Wie eingangs bereits erwähnt, kann bei Vorsehen eines Seils als Führungsorgan das Reinigungsshuttle sich nach Art einer Seilbahn entlang des Führungsorgans bewegen.

Das Reinigungsshuttle kann auf das Führungsorgan auffädelbar sein. Hierdurch ist sichergestellt, dass sich das Reinigungsshuttle nicht vom Führungsorgan lösen kann. Zudem ist hierdurch eine besonders sichere seitliche Führung gewährleistet.

Das Reinigungsshuttle und das Führungsorgan können derart zusammenwirken, dass das Reinigungsshuttle am Führungsorgan bezüglich der Längserstreckung des Führungsorgans, also bezüglich der Pendelrichtung, ausgerichtet ist. Hierdurch ist eine stabile Ausrichtung des Reinigungsorgans quer zur Pendelrichtung gewährleistet.

Gemäß einer weiteren Alternative kann die Führung zumindest ein Führungsorgan umfassen, an dem das Reinigungsshuttle im montierten Zustand befestigt ist, so dass sich das Reinigungsshuttle im Betrieb gemeinsam mit dem Führungsorgan bewegt. Das Führungsorgan kann flexibel und insbesondere ein Seil oder ein Draht sein. In dieser Variante bewegt sich das Reinigungsshuttle nicht entlang eines Führungsorgans, sondern gemeinsam mit dem Führungsorgan.

Das Führungsorgan kann flexibel und im montierten Zustand an beiden Haltern umgelenkt sein. Insbesondere kann das Führungsorgan endlos oder mit beiden Enden am Reinigungsshuttle befestigt sein.

In einer möglichen Ausgestaltung umfasst die Führung zwei Führungsorgane, die sich im montierten Zustand jeweils von einem der Halter zum Reinigungsshuttle erstrecken und deren sich zwischen jeweiligem Halter und Reinigungsshuttle erstreckende Längen im Betrieb veränderlich sind, insbesondere derart, dass die Summe beider Längen konstant ist. Die Führungsorgane können flexibel und z.B. als Seil oder Draht ausgebildet und am jeweiligen Halter aufwickelbar sein, insbesondere federunterstützt.

Grundsätzlich kann vorgesehen sein, dass sich das Reinigungsshuttle im Betrieb vollständig mit seinem Reinigungsorgan an der oder den zu reinigenden Moduloberflächen abstützt. Dies ist jedoch nicht zwingend. Gemäß einigen Ausführungsbeispielen kann vorgesehen sein, dass das Reinigungsshuttle im Betrieb zumindest zum Teil von der Führung getragen ist. Beispielsweise ein die Führung bildendes Seil bildet dann nicht nur ein Führungsseil, sondern gleichzeitig auch ein Tragseil für das Reinigungsshuttle, so dass nicht die gesamte Gewichtskraft des Reinigungsshuttle auf der oder den Moduloberflächen lastet, aber immer noch ein für eine gute Reinigungswirkung ausreichender Teil.

Gemäß einer Alternative kann das Reinigungsshuttle dazu ausgebildet sein, sich schwerkraftgetrieben vom momentan oberen Halter zum momentan unteren Halter zu bewegen. Vorzugsweise ist dabei für das Reinigungsshuttle weder ein externer Antrieb noch ein Eigenantrieb vorgesehen, so dass das Reinigungsshuttle ausschließlich schwerkraftgetrieben bewegbar ist. Eine derartige Reinigungsvorrichtung ist besonders kostengünstig und einfach herstellbar, da kein Antrieb und somit auch keine Energieversorgung benötigt wird. Eine solche Reinigungsvorrichtung ist daher insbesondere für solche Anlagen gedacht, die schwenkbare Module umfassen, welche der Sonne nachgeführt werden können. Eine Reinigungsvorrichtung mit schwerkraftgetriebenem Reinigungsshuttle kommt grundsätzlich aber auch für Anlagen mit feststehenden Modulen in Frage. Es wird dann durch geeignete Rückholmittel, z.B. einen elektromotorischen Antrieb, dafür gesorgt, dass das Reinigungsshuttle nach einer Abwärtsbewegung wieder zum oberen Halter gelangt.

Gemäß einer weiteren Variante ist zumindest an einem der Halter ein motorischer Antrieb für die Führung vorgesehen. Insbesondere kann der Antrieb an einer Umlenkung für ein flexibles Führungsorgan der Führung wirksam sein.

Es können mehrere Paare von Haltern vorgesehen sein, wobei Halter unterschiedlicher Paare mechanisch, insbesondere mittels einer oder mehrerer Kopplungsstangen, in Reihe schaltbar und die Führungen der unterschiedlichen Paare gemeinsam von dem motorischen Antrieb eines der Halter antreibbar sind.

Es genügt somit ein Antrieb, um mehrere Führungen antreiben und somit mehrere Reinigungsshuttle gleichzeitig betrieben zu können. Ein solches Konzept eignet sich somit besonders für Anlagen mit Modulreihen, die jeweils von mehreren nebeneinander angeordneten Modulen gebildet sind.

Was die Montierbarkeit der Halter an der Anlage betrifft, so kann vorgesehen sein, dass die Halter jeweils an einem von zwei einander gegenüberliegenden Rahmenteilen eines Modulrahmens oder jeweils an einem von zwei einander gegenüberliegenden Übergangsbereichen zwischen zwei benachbarten Modulrahmen montierbar sind. Eine Anordnung aus zwei Haltern, Führung und Reinigungsshuttle kann also entweder einem Modul oder zwei benachbarten Modulen zugeordnet werden.

In einem Ausführungsbeispiel können die Halter jeweils durch werkzeugloses und befestigungsmittelfreies Stecken montierbar sein. Alternativ ist es möglich, die Halter durch Verschrauben zu montieren. Dabei ist es möglich, dass die Halter derart ausgebildet sind, dass sie jeweils zunächst gesteckt und dann verschraubt werden können.

In Abhängigkeit von der konkreten Ausgestaltung der Module bzw. der Modulrahmen oder Rahmenteile kann ein zusätzliches Verschrauben zur endgültigen Fixierung insbesondere dann erforderlich sein, wenn für ein ausreichendes stabiles Stecken der Halter nicht genügend Platz und insbesondere keine ausreichende Stecktiefe vorhanden ist.

Eine einzige Schraubverbindung kann genügen. Da Schraubverbindungen schnell und einfach herstellbar sind und keine aufwendigen Werkzeuge erfordern, ermöglichen auch zu verschraubende Halter sowohl eine einfache und kostengünstige Herstellung als auch eine schnelle und unkomplizierte Montage.

In bevorzugten Ausgestaltungen sind die Halter derart ausgebildet, dass sie jeweils werkzeuglos und befestigungsmittelfrei montierbar sind.

Wenn die Halter jeweils auf einen Modulrahmen oder jeweils gleichzeitig auf zwei benachbarte Modulrahmen aufsteckbar sind, dann kann insbesondere vorgesehen sein, dass die Halter jeweils zusätzlich in einen zwischen benachbarten Modulrahmen vorhandenen Spalt einsteckbar sind. Nicht nur der Modulrahmen oder die beiden Modulrahmen selbst, sondern auch ein gegebenenfalls vorhandener Zwischenraum zwischen zwei benachbarten Modulrahmen kann zur Herstellung einer Steckverbindung genutzt werden.

Die Halter können jeweils einen Steckabschnitt aufweisen, der zwei seitliche Aufsteckabschnitte zum Aufstecken auf zwei benachbarte Modulrahmen und einen mittleren, zwischen den Aufsteckabschnitten befindlichen Einsteckabschnitt zum Einstecken in den zwischen den beiden benachbarten Modulrahmen vorhandenen Spalt aufweist. Die seitlichen Aufsteckabschnitte können jeweils einen Rastabschnitt zum Verrasten mit dem jeweiligen Modulrahmen aufweisen.

Das Konzept des Verrastens ist grundsätzlich unabhängig von der sonstigen konkreten Ausgestaltung der Halter. Generell können die Halter jeweils an einem Modulrahmen oder jeweils gleichzeitig an zwei benachbarten Modulrahmen verrastbar sein. Das Verrasten kann mittels zumindest eines Rastabschnitts erfolgen, der beim Aufstecken des Halters auf den Modulrahmen bereichsweise elastisch auslenkbar oder verformbar ist und im aufgesteckten Zustand den Modulrahmen verriegelnd hintergreift. Der Rastabschnitt kann z.B. an einem elastisch auslenkbaren oder verformbaren, insbesondere laschenartigen, Bereich eine Raststruktur mit einer Mehrzahl von in Steckrichtung aufeinanderfolgenden Rastvorsprüngen aufweisen. Die Rastvorsprünge können beispielsweise in Form von Rippen vorgesehen sein.

Was einen möglichen Grundaufbau der Halter betrifft, so können die Halter jeweils einen Steckabschnitt zum Aufstecken auf einen Modulrahmen oder gleichzeitig auf zwei benachbarte Modulrahmen, einen Halteabschnitt für die Führung und einen, bevorzugt zwischen Steckabschnitt und Halteabschnitt befindlichen, Aufnahmeabschnitt zum Parken des Reinigungsshuttle in einer Parkposition aufweisen. Die Halter können also nicht nur die Führung halten, sondern können auch dazu dienen, das Reinigungsshuttle aufzunehmen, nachdem es einen Reinigungsvorgang absolviert hat.

Die Halter können jeweils einen Aufnahmeabschnitt zum Parken des Reinigungsshuttle in einer Parkposition aufweisen, der relativ zu einem Montageabschnitt, insbesondere einem Steckabschnitt, des Halters derart angeordnet ist, dass im montierten Zustand das geparkte Reinigungsshuttle sich mit seinem Reinigungsorgan außerhalb der Moduloberflächen befindet.

Im Zusammenhang mit einem Aufnahmeabschnitt kann vorgesehen sein, dass die Halter jeweils eine zum Aufnahmeabschnitt führende Auflauframpe für das Reinigungsshuttle aufweisen. Hierdurch kann gewährleistet werden, dass das einlaufende Reinigungsshuttle sicher und störungsfrei in den Aufnahmeabschnitt gelangt.

Der Aufnahmeabschnitt kann eine Ausrichtstruktur mit Ausrichtflächen aufweisen, die beim Einfahren des Reinigungsshuttle in den Aufnahmeabschnitt durch Zusammenwirken mit Gegenflächen des Reinigungsshuttle für eine vorgegebene Ausrichtung des Reinigungsshuttle relativ zum Halter sorgen.

Hierdurch erfolgt nach jedem Reinigungsvorgang ein automatisches Ausrichten des Reinigungsshuttle, womit sichergestellt ist, dass vor dem nächsten Reinigungsvorgang das Reinigungsshuttle eine korrekte Orientierung relativ zu dem Modul oder zu den Modulen aufweist, an dem oder an denen der Halter montiert ist.

Die Ausrichtstruktur kann zwei seitliche Plattformen für am Reinigungsshuttle ausgebildete, seitlich abstehende Arme und zwischen den Plattformen einen Aufnahmeraum für das Reinigungsshuttle umfassen.

Des Weiteren kann vorgesehen sein, dass die Halter jeweils eine schwerkraftgesteuerte, insbesondere rein mechanisch wirksame, Halte- und Freigabeeinrichtung für das Reinigungsshuttle aufweisen.

Wenn die Reinigungsvorrichtung an einer Anlage mit schwenkbaren Modulen montiert ist, kann eine derartige Halte- und Freigabeeinrichtung gewährleisten, dass das Reinigungsmodul so lange festgehalten wird, bis das betreffende Modul bzw. die betreffenden Module ausreichend stark geneigt sind, damit das Reinigungsshuttle nach seiner Freigabe möglichst schnell Fahrt aufnimmt, d.h. nach möglichst kurzer Zeit eine im Hinblick auf die Reibung zwischen Reinigungsorgan und Moduloberflächen ausreichend hohe Geschwindigkeit aufweist. Bei einem zu früh, d.h. bei noch vergleichsweise geringer Modulneigung sich in Bewegung setzendem Reinigungsshuttle bestünde die Gefahr, dass es aufgrund der Reibung zu einer "stotternden" Bewegung kommt, was die Reinigungswirkung beeinträchtigen könnte.

Die Halte- und Freigabeeinrichtung kann, muss aber nicht, rein mechanisch arbeiten. So ist es beispielsweise alternativ möglich, einen oder mehrere Permanentmagnete als Haltemagnet für das Reinigungsshuttle mit vorgegebener, an das Gewicht des Reinigungsshuttle angepasster Haltekraft vorzusehen. Auch in geeigneter Weise elektrisch betreibbare, automatisch arbeitende Halte- und Freigabeeinrichtungen sind grundsätzlich möglich.

Die Halte- und Freigabeeinrichtung kann einen beweglich am jeweiligen Halter gelagerten Steuerhebel aufweisen, der an dem einen Ende eine Steuermasse trägt und mit dem anderen Ende mit einer am Reinigungsshuttle ausgebildeten Steuerkurve zusammenwirkt, wobei die Halte- und Freigabeeinrichtung in Abhängigkeit von der Orientierung des Halters im Raum das in einer Parkposition am Halter befindliche Reinigungsshuttle entweder hält oder freigibt. Eine solche Einrichtung kann rein mechanisch realisiert werden.

Eine besonders kostengünstige Herstellung auch großer Stückzahlen der Halter wird ermöglicht, wenn gemäß einigen Ausführungsbeispielen vorgesehen ist, dass die Halter jeweils einstückig ausgebildet sind. Die Halter können dabei jeweils aus Kunststoff bestehen und bevorzugt als Kunststoffspritzgussteil ausgebildet sein.

Was einen möglichen Aufbau des Reinigungsshuttle betrifft, so kann das Reinigungsshuttle einen von dem Reinigungsorgan separaten, mit der Führung zusammenwirkenden Läufer umfassen. Der Läufer kann als Mitnehmer für das Reinigungsorgan ausgebildet sein. Der Läufer kann im Vergleich zur Breite der Module - also im Vergleich zur Längserstreckung des Reinigungsorgans - schmal ausgeführt sein.

Das Reinigungsorgan und der Läufer können jeweils einen Koppelabschnitt aufweisen, wobei im montierten Zustand der Koppelabschnitt des Reinigungsorgans und der Koppelabschnitt des Läufers formschlüssig ineinandergreifen.

Das Reinigungsorgan und der Läufer können lösbare miteinander koppelbar sein. Dies kann beispielsweise durch eine Rast- oder Schnappverbindung erfolgen.

Der Läufer kann bezüglich der Längserstreckung des Reinigungsorgans mittig angeordnet sein, wobei sich das Reinigungsorgan zu beiden Seiten des Läufers jeweils um ein Mehrfaches der in Längserstreckung des Reinigungsorgans gemessenen Breite des Läufers von diesem auskragt.

Der Läufer wirkt mit der Führung zusammen, die beispielsweise lediglich von einem Seil oder einem Draht gebildet wird, und kann daher vergleichsweise schmal ausgeführt sein. Das Reinigungsorgan kann dann im mit dem Läufer verbundenen Zustand nach Art von Flügeln oder Tragflächen zu beiden Seiten vom Läufer abstehen. In Abhängigkeit von den jeweiligen Verhältnissen und Abmessungen kann das Reinigungsorgan auf jeder Seite des Läufers ein Modul vollständig abdecken, so dass die Reinigungsvorrichtung mit dem Reinigungsmodul zwei benachbarte Module gleichzeitig reinigen kann. Die Arbeitsbreite des Reinigungsorgans kann auch noch größer sein. Das Reinigungsorgan kann sich beispielsweise auf beiden Seiten des Läufers auch über die 1 ,5-fache oder über die 2-fache Breite eines Moduls erstrecken.

Das Reinigungsorgan kann einen mit dem Läufer koppelbaren Träger und zumindest ein am Träger angebrachtes Reinigungselement umfassen. Bei dem Reinigungselement kann es sich beispielsweise um eine Bürstenleiste handeln. Dabei kann beispielsweise ein einziges durchgehendes Reinigungselement vorgesehen sein. Alternativ können zwei jeweils am Läufer endende Reinigungselemente vorgesehen sein. Eine derartige Zweiteilung des Reinigungsorgans kann insbesondere dann vorgesehen, wenn ein sich von Halter zu Halter erstreckendes langgestrecktes Führungsorgan vorgesehen ist, das folglich durch den Bereich des Reinigungsorgans hindurch verlaufen muss und sich beispielsweise durch den insofern auf das Führungsorgan aufgefädelten Läufer hindurch erstreckt.

Die erfindungsgemäße Anlage zur Nutzung von Sonnenenergie umfasst mehrere über eine gemeinsame Tragkonstruktion zusammenhängende Module, die jeweils eine Moduloberfläche und einen Modulrahmen aufweisen, sowie eine oder mehrere erfindungsgemäße Reinigungsvorrichtungen, insbesondere wie vorstehend erläutert und nachstehend anhand der Figuren erläutert. Die Tragkonstruktion kann eine Aufständerung sein oder an einer Aufständerung angebracht sein. Die Anlage kann auch zur Anbringung auf einem Gebäudedach ausgebildet sein.

Es kann vorgesehen sein, dass die Halter einer jeweiligen Reinigungsvorrichtung jeweils an einem von zwei einander gegenüberliegenden Rahmenteilen eines Modulrahmens oder an einem von zwei einander gegenüberliegenden Übergangsbereichen zwischen zwei benachbarten Modulrahmen montiert sind, insbesondere werkzeuglos und befestigungsmittelfrei.

Die Halter einer jeweiligen Reinigungsvorrichtung können jeweils an einem von zwei einander gegenüberliegenden Übergangsbereichen zwischen zwei benachbarten Modulrahmen montiert sein, wobei das Reinigungsshuttle mit dem Reinigungsorgan die beiden benachbarten Module jeweils vollständig abdeckt. Wie vorstehend erwähnt, kann das Reinigungsshuttle mit dem Reinigungsorgan auch noch weiter reichen, also über das jeweilige Modul hinaus zum nächstfolgenden Modul, um dieses teilweise oder ebenfalls vollständig abzudecken.

Wenn die Halter einer jeweiligen Reinigungsvorrichtung aufsteckbar sind, dann verläuft die Steckrichtung vorzugsweise parallel zu den Moduloberflächen. Bei dieser Ausgestaltung werden die Halter also - bezogen auf die Moduloberflächen - jeweils nicht von oben, sondern seitlich aufgesteckt. Wenn die Führung, insbesondere ein langgestrecktes Führungsorgan wie z.B. ein Seil oder ein Draht, derart ausgebildet ist, dass die Halter im montierten Zustand mittels der Führung aufeinander zu gespannt sind, erfolgt hierdurch eine zusätzliche Sicherung der Steckverbindung.

Des Weiteren ist bevorzugt vorgesehen, dass die Halter einer jeweiligen Reinigungsvorrichtung jeweils zusätzlich in einen zwischen zwei benachbarten Modulrahmen vorhandenen Spalt eingesteckt sind.

Bei bevorzugten Ausführungsformen ist an jedem zweiten Übergang zwischen zwei benachbarten Modulen eine Reinigungsvorrichtung montiert, deren Reinigungsorgan die jeweiligen beiden benachbarten Moduloberfläche jeweils vollständig abdeckt. Alternativ kann an jedem Übergang zwischen zwei benachbarten Modulen eine Reinigungsvorrichtung montiert sein, deren Reinigungsorgan die jeweiligen beiden benachbarten Moduloberflächen jeweils zur Hälfte abdeckt.

Die Halter einer jeweiligen Reinigungsvorrichtung können jeweils einen Aufnahmeabschnitt zum Parken des Reinigungsshuttle in einer Parkposition aufweisen, wobei im montierten Zustand das am Aufnahmeabschnitt geparkte Reinigungsshuttle sich mit dem Reinigungsorgan außerhalb der Moduloberflächen und/oder mit einer Arbeitsseite des Reinigungsorgans in einer Ebene oberhalb der Moduloberflächen befindet.

Eine außerhalb der Moduloberflächen vorhandene Parkposition stellt sicher, dass die Moduloberflächen vollständig abgereinigt werden können.

Die Führung einer jeweiligen Reinigungsvorrichtung kann zumindest ein langgestrecktes flexibles Führungsorgan umfassen, insbesondere ein Seil oder einen Draht, das oberhalb der Moduloberflächen mit dem Reinigungsshuttle zusammenwirkt und das an beiden Haltern umgelenkt ist und sich oberhalb oder unterhalb der Module oder in einem Spalt zwischen zwei benachbarten Modulen zwischen den Haltern erstreckt. Das Führungsorgan kann endlos sein oder mit beiden Enden oberhalb der Moduloberflächen am Reinigungsshuttle befestigt sein.

Vorzugsweise ist eine jeweilige Reinigungsvorrichtung derart ausgebildet, dass im Betrieb das Reinigungsshuttle ausschließlich mit dem Reinigungsorgan die Moduloberflächen berührt. Zusätzliche Stütz- oder Führungseinrichtungen wie beispielsweise Rollen oder Gleiter sind nicht vorgesehen. Wie an anderer Stelle bereits erwähnt, kann das Gewicht des Reinigungsshuttle zum Teil über das Reinigungsorgan auf den Moduloberflächen und zum Teil über die Führung auf den Haltern und damit auf dem Modulrahmen lasten. Dieses Verhältnis kann derart eingestellt sein, dass zur Erzielung einer ausreichenden Reinigungswirkung das Reinigungsorgan mit einem vorgegebenen Druck auf den Moduloberflächen lastet, dieser Druck aber nicht derart hoch ist, dass die Relativbewegung zwischen Reinigungsorgan und Moduloberflächen einer zu hohen Reibung unterworfen ist.

Die Module der Anlage können schwenkbar sein, wobei das Reinigungsshuttle einer jeweiligen Reinigungsvorrichtung dazu ausgebildet ist, sich schwerkraftgetrieben vom momentan oberen Halter zum momentan unteren Halter zu bewegen. Vorzugsweise ist dabei für das Reinigungsshuttle weder ein externer Antrieb noch ein Eigenantrieb vorgesehen und ist das Reinigungsshuttle ausschließlich schwerkraftgetrieben bewegbar.

Ferner kann vorgesehen sein, dass die Halter einer jeweiligen Reinigungsvorrichtung jeweils eine schwerkraftgesteuerte Halte- und Freigabeeinrichtung für das Reinigungsshuttle aufweisen, die in Abhängigkeit von der Orientierung des Halters im Raum das in einer Parkposition am Halter befindliche Reinigungsshuttle entweder hält oder freigibt. Insbesondere ist die Halte- und Freigabeeinrichtung derart ausgebildet, dass eine Freigabe erst bei Erreichen einer Orientierung des Halters im Raum erfolgt, die im höchsten Punkt der Bewegungsbahn des Halters beim Verschwenken des Moduls entspricht.

In weiteren Ausführungsformen der erfindungsgemäßen Anlage kann diese eine oder mehrere Modulreihen aufweisen, die jeweils von mehreren Modulen gebildet sind, wobei mehrere Reinigungsvorrichtungen für die eine Modulreihe bildenden Module vorgesehen sind. Dabei sind auf der gleichen Seite angeordnete Halter unterschiedlicher Reinigungsvorrichtungen mechanisch in Reihe geschaltet und die Führungen der unterschiedlichen Reinigungsvorrichtungen sind gemeinsam von einem motorischen Antrieb antreibbar, der an einem der Halter vorgesehen ist und durch die mechanische Reihenschaltung seine Antriebsbewegung an die anderen Halter überträgt. Die mechanische Reihenschaltung kann beispielsweise durch eine oder mehrere Kopplungsstangen realisiert werden.

Die Erfindung wird im Folgenden beispielhaft unter Bezugnahme auf die Zeichnung beschrieben. Es zeigen:
- Fig. 1 bis 6: verschiedene Ansichten einer Photovoltaikanlage mit montierter Reinigungsvorrichtung gemäß der Erfindung,
- Fig. 7 bis 11: verschiedene Ausführungsformen eines Halters einer erfindungsgemäßen Reinigungsvorrichtung,
- Fig. 12 bis 14: weitere Komponenten einer erfindungsgemäßen Reinigungsvorrichtung,
- Fig. 15: einen Halter 21 einer erfindungsgemäßen Reinigungsvorrichtung in einer Schnittdarstellung im montierten Zustand,
- Fig. 16: eine Ansicht entsprechend Fig. 15 mit am Halter in einer Parkposition befindlichem Reinigungsshuttle, und
- Fig. 17: eine perspektivische Ansicht auf einen Reinigungsshuttle einer erfindungsgemäßen Reinigungsvorrichtung, der sich in einer Parkposition an einem an der Anlage montierten Halter befindet.

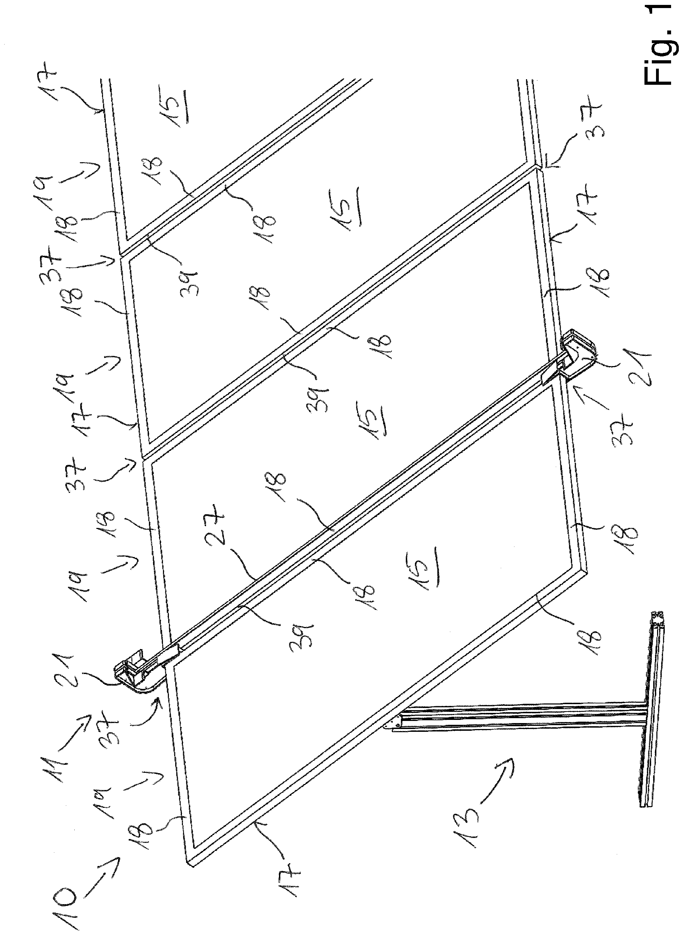

Fig. 1 zeigt eine aufgeständerte Photovoltaikanlage 10, von der eine Modulreihe dargestellt ist, die mehrere nebeneinander Module 19 aufweist. Die Module 19 sind an einer als Aufständerung ausgebildeten Tragkonstruktion 13 angebracht. Wie an anderer Stelle näher erläutert, sind die Module 19 um eine horizontale Achse schwenkbar, um dem Lauf der Sonne nachgeführt werden zu können.

Jedes Modul 19 umfasst einen rechtwinkligen Modulrahmen 17, der zwei kurze und zwei lange Rahmenteile 18 aufweist, die beispielsweise als im Querschnitt U-förmige Metallprofile ausgebildet sein können. Von dem Modulrahmen 17 sind die aktiven Photovoltaikelemente eingefasst, die gemeinsam eine Moduloberfläche 15 bilden. Zwischen zwei unmittelbar benachbarten Modulen 19 ist zwischen deren einander zugewandten langen Rahmenteilen 18 ein in dieser Längsrichtung verlaufender Spalt 39 vorhanden.

Ein solcher Grundaufbau einer Photovoltaikanlage, der grundsätzlich auch bei einer Solarthermieanlage und auch bei solchen Anlagen zur Nutzung von Sonnenenergie gegeben sein kann, die nicht auf dem Grund aufgeständert sind, sondern sich beispielsweise auf einem Gebäudedach befinden, ist grundsätzlich bekannt.

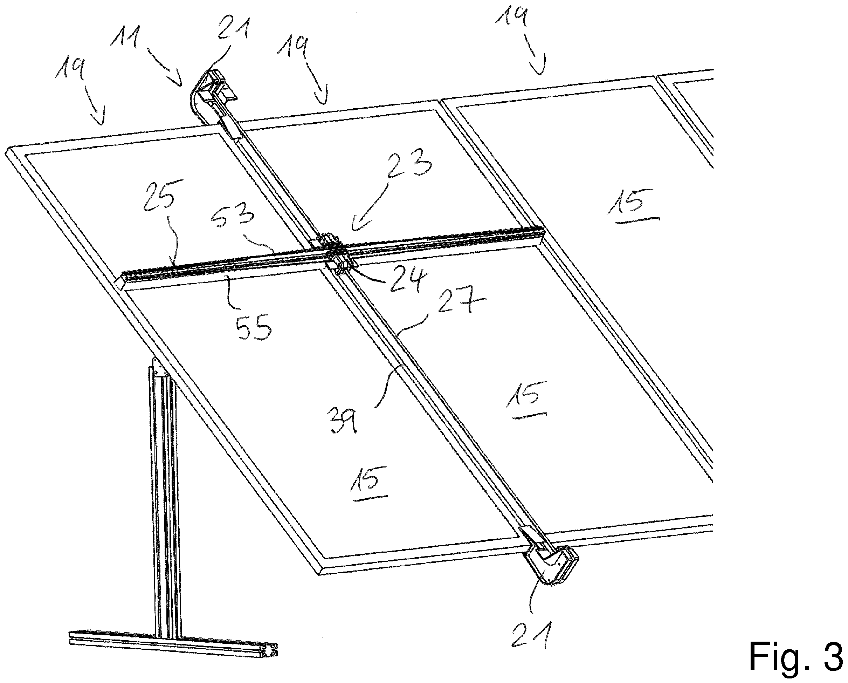

In Fig. 1 ist die erfindungsgemäße Reinigungsvorrichtung 11 nicht vollständig dargestellt. Gezeigt sind lediglich zwei hier baugleiche, jeweils als Kunststoffspritzgussteil ausgebildete Halter 21 der Reinigungsvorrichtung 11 und ein langgestrecktes Führungsorgan in Form eines einzigen Seils 27. Die Halter 21 sind hier einander gegenüberliegend jeweils am Übergangsbereich 37 zwischen den beiden Modulen 19 montiert. Wie an anderer Stelle näher beschrieben, sind hierzu die Halter 21 jeweils in einer parallel zu den Moduloberflächen 15 verlaufenden Steckrichtung von außen auf die beiden einander benachbarten Modulrahmen 17 aufgesteckt und dabei gleichzeitig in den Spalt 39 zwischen den beiden Modulrahmen 17 eingesteckt. An den Haltern 21 ausgebildete Rastabschnitte sorgen dabei für eine sichere Verrastung und damit verriegelnde Fixierung der Halter 21 an den Rahmenteilen 18. Zur Führung eines nachstehend näher beschriebenen, hier nicht dargestellten Reinigungsshuttle 23 (vgl. z.B. Fig. 3) dient das Seil 27, welches zwischen die beiden Halter 21 gespannt, d.h. mit je einem Ende an einem der Halter 21 verankert ist.

Wie nachstehend beschrieben, ermöglicht die Reinigungsvorrichtung 11 eine Reinigung derjenigen beiden Module 19, an deren Übergangsbereichen 37 die Halter 21 der Reinigungsvorrichtung 11 aufgesteckt sind. Eine Modulreihe kann folglich vollständig gereinigt werden, wenn an jedem zweiten Übergang zwischen zwei benachbarten Modulen 19 eine erfindungsgemäße Reinigungsvorrichtung 11 montiert wird. Alternativ ist es beispielsweise auch möglich, die Halter 21 nicht am Übergang zwischen zwei benachbarten Module 19 zu montieren, sondern für jedes Modul 19 eine Reinigungsvorrichtung 11 vorzusehen, deren Halter 21 beispielsweise mittig an den kurzen, quer verlaufenden Modulrahmen 18 angebracht werden. Je nach konkreter Ausgestaltung kann dann die Länge des für die eigentliche Reinigung sorgenden Reinigungsorgans variieren, wie an anderer Stelle erläutert ist.

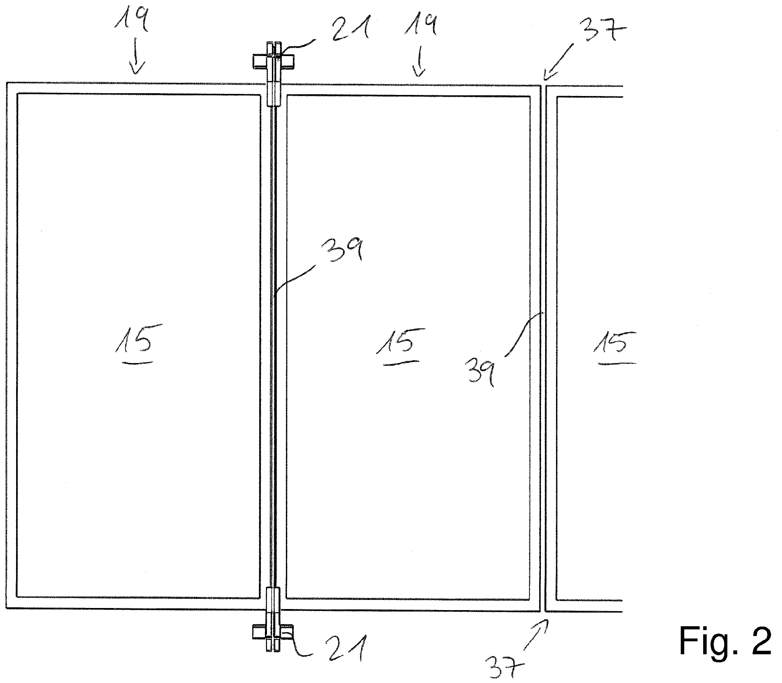

Fig. 2 zeigt die Anordnung der Fig. 1 von oben aus einer senkrecht zu den Moduloberflächen 15 verlaufenden Richtung.

Fig. 3 zeigt eine Ansicht entsprechend Fig. 1, wobei die Reinigungsvorrichtung 11 hier vollständig dargestellt ist. Zusätzlich zu den beiden Haltern 21 umfasst die Reinigungsvorrichtung 11 ein Reinigungsshuttle 23, das einen Läufer 24 und ein Reinigungsorgan 25 umfasst. Zur Führung des Reinigungsshuttle 23 dient das bereits erwähnte langgestreckte Führungsorgan, das hier in Form des einzigen Seils 27 vorgesehen ist, welches zwischen die beiden Halter 21 gespannt, d.h. mit je einem Ende an einem der Halter 21 verankert ist.

Das Seil 27 erstreckt sich durchgehend von dem einen Halter 21 zum anderen Halter 21, und zwar durch den Läufer 23 hindurch, der insofern auf das Seil 27 aufgefädelt ist. Während einer schwerkraftgetriebenen Abwärtsbewegung ist das Reinigungsshuttle 23 also mittels seines Läufers 24 am Seil 27 geführt.

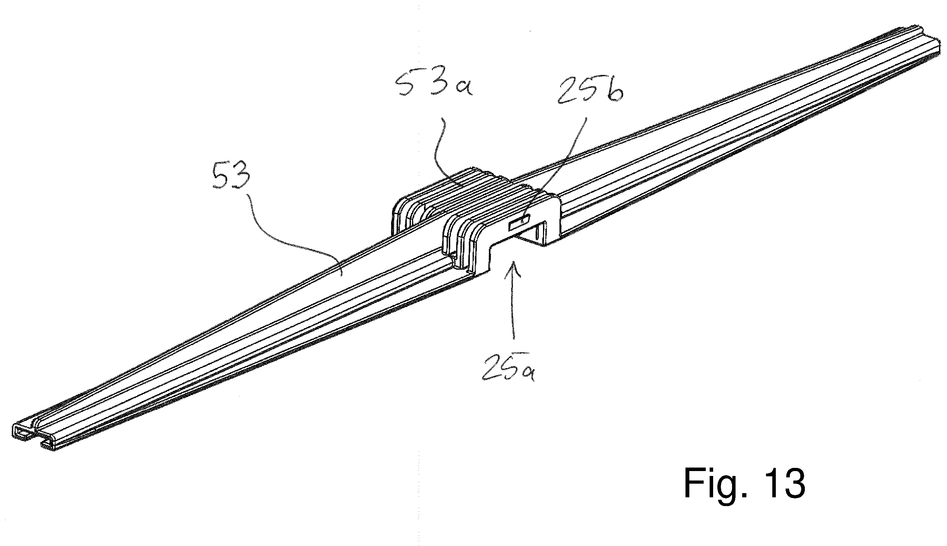

Die eigentliche Reinigung der Moduloberflächen 15 erfolgt durch das Reinigungsorgan 25, das über einen Träger 53 am Läufer 24 angebracht ist und zwei zu beiden Seiten des Läufers 24 am Träger 53 angebrachte Reinigungselemente 55 aufweist, die jeweils eine Basis 55a zur Anbringung am Träger 53 sowie eine Beborstung 55b (vgl. Fig. 13) aufweisen, die im dargestellten montierten Zustand die Moduloberflächen 15 mit ihrer Unterseite berührt.

Folglich werden die beiden Moduloberflächen 15 gereinigt, wenn sich das mittels des Läufers 24 am Seil 27 geführte Reinigungsshuttle 23 nach unten bewegt und dabei die beiden jeweils von einer Basis 55a und einer Beborstung 55b (vgl. Fig. 13) gebildeten Bürstenleisten die jeweilige Moduloberfläche 15 abkehren.

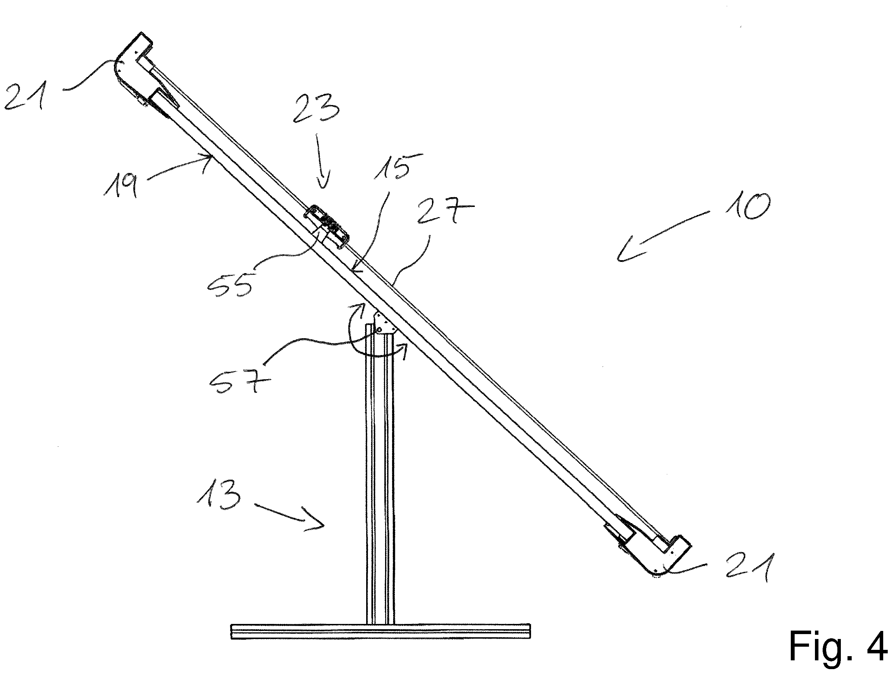

Fig. 4 zeigt die Anordnung von Fig. 3 in einer vertikalen Schnittebene durch das Führungsseil 27, wobei außerdem durch den Doppelpfeil die erwähnte Verschwenkbarkeit der Module 19 um die horizontale Schwenkachse 57 angedeutet ist. Insbesondere zeigt Fig. 4, dass das Reinigungsshuttle 23 ausschließlich mit der Bürstenleiste des Reinigungselements 55 auf den Moduloberflächen 15 aufliegt.

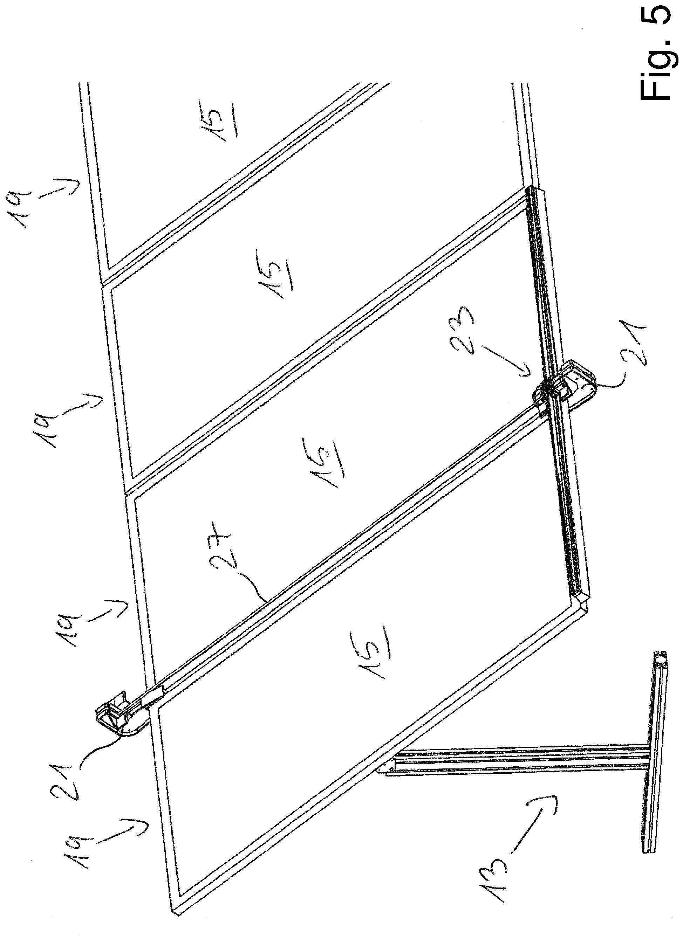

Fig. 5 zeigt eine Ansicht entsprechend Fig. 3, wobei sich das Reinigungsshuttle 23 in einer Parkposition am momentan unteren Halter 21 befindet.

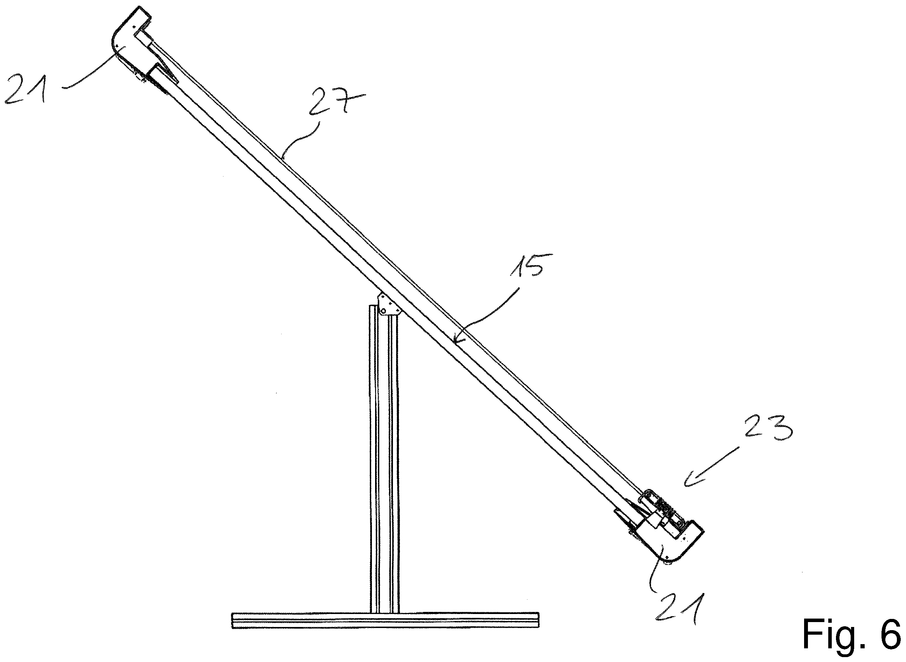

Fig. 6 zeigt die Situation der Fig. 5 in einer Ansicht entsprechend Fig. 4, der insbesondere zu entnehmen ist, dass bei am Halter 21 parkendem Reinigungsshuttle 23 dieses sich mit dem Reinigungselement 55 außerhalb des Moduls 19 befindet, und zwar nicht nur außerhalb der Moduloberfläche 15, sondern auch außerhalb des Modulrahmens 17. Verschmutzungen können so vollständig von den Modulen 15 heruntergekehrt werden.

Die erfindungsgemäße Reinigungsvorrichtung 11 ermöglicht somit einen rein mechanischen und vollautomatischen Reinigungsbetrieb unter Ausnutzung der Schwerkraft. Werden beispielsweise ausgehend von dem Zustand gemäß Fig. 5 und 6 die Module 19 verschwenkt, verändert sich die Neigung der Moduloberflächen 15, so dass der zuvor untere Halter 21 nach oben gelangt und das Reinigungsshuttle 23 unter dem Einfluss der Schwerkraft wieder zurück zum anderen Halter 21 gelangen kann. Somit pendelt das Reinigungsshuttle 23 selbsttätig alleine aufgrund der Schwerkraft zwischen den beiden Haltern 21, wobei es von dem Seil 27 geführt wird und nur mit seinen Borstenleisten die Moduloberflächen 15 berührt. Mit Ausnahme der Führung durch das Seil 27 ist das Reinigungsshuttle 23 frei beweglich und kann nicht verkanten, wobei gleichzeitig die Führung durch das Seil 27 dafür sorgt, dass sich das Reinigungsshuttle 23 nach einer vorübergehenden Schrägstellung, z.B. aufgrund temporär unterschiedlicher Reibungsverhältnisse auf beiden Seiten des Läufers 24, immer wieder korrekt ausrichten kann.

Wie insbesondere Fig. 3 zu entnehmen ist, ist der Läufer 24 bezüglich der Längserstreckung des Reinigungsorgans 25 mittig angeordnet, wobei das Führungsseil 27 mittig durch den Läufer 24 hindurch verläuft. Durch diese zentrale Führung wird ein Verkanten des Reinigungsshuttle 23 vermieden, wie es bei einer Doppelführung z.B. im Bereich der beiden Enden eines sich in Querrichtung erstreckenden Reinigungsorgans in der Praxis leicht der Fall wäre. Eine solche unproblematische mittige Führung kann auch durch mehrere eng beieinander liegende Führungsseile 27 erreicht werden, wenn dies beispielsweise zur Erhöhung der Tragkraft der zwischen die Halter 21 gespannten Führung vorteilhaft ist. Die erwähnten Vorteile der erfindungsgemäßen Reinigungsvorrichtung sind somit nicht auf das Vorsehen eines einzigen Führungsseils 27 beschränkt.

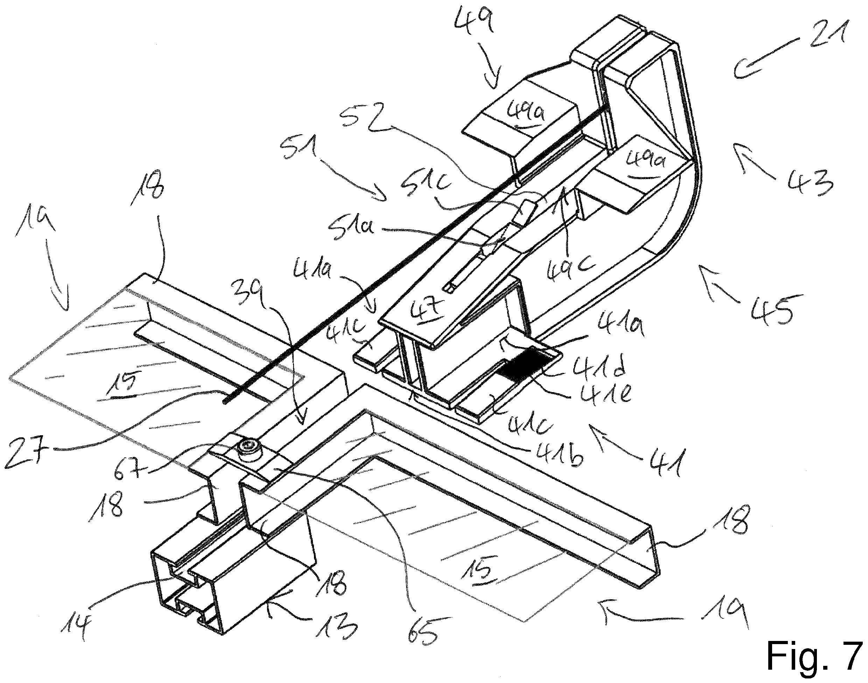

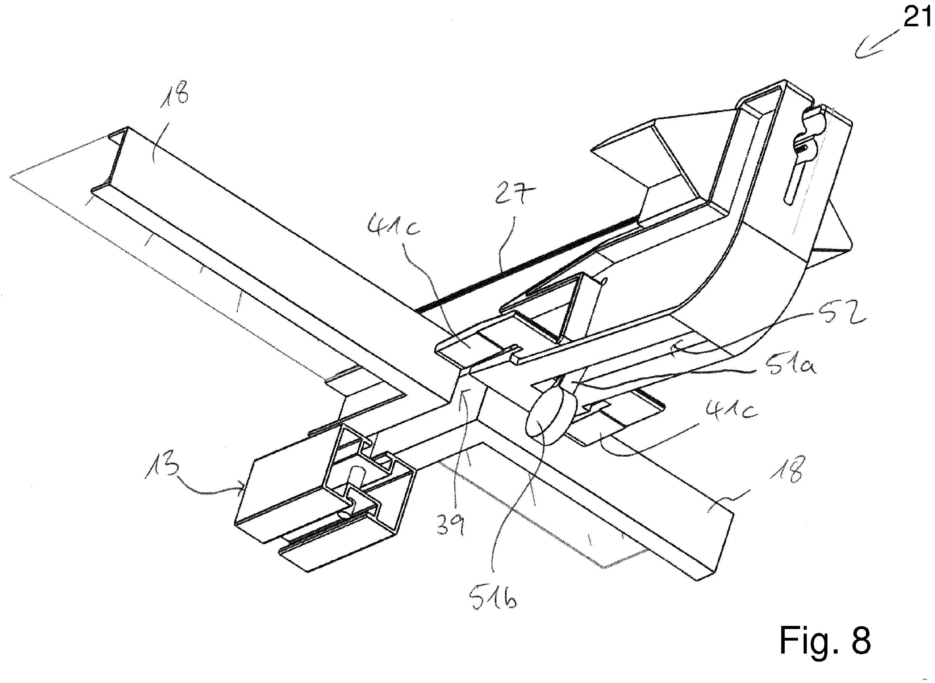

Die Fig. 7 und 8 zeigen jeweils ein Ausführungsbeispiel eines erfindungsgemäßen Halters 21 an einem Übergangsbereich zwischen zwei benachbarten Modulen 19 im noch nicht montierten Zustand aus zwei unterschiedlichen Perspektiven.

Die in Längsrichtung verlaufenden Rahmenteile 18 sind an der Tragkonstruktion 13 mittels Schrauben 67 und Klemmelementen 65 befestigt, wobei die Rahmenteile 18 über die Tragkonstruktion 13 hinaus vorstehen, so dass der Spalt 39 zwischen den Rahmenteilen 18 von der Außenseite bis zur ersten Schraube 67 frei ist.

Wie zuvor erläutert, umfasst eine erfindungsgemäße Reinigungsvorrichtung vorzugsweise zwei baugleiche Halter 21, die einander gegenüberliegend an der jeweiligen Anlage montiert werden.

Der Halter 21 gemäß den Fig. 7 und 8 umfasst einen hier als Steckabschnitt ausgebildeten Montageabschnitt 41, einen Halteabschnitt 43 sowie einen zwischen Montageabschnitt 41 und Halteabschnitt 43 befindlichen Aufnahmeabschnitt 45, an welchem sich das hier nicht dargestellte Reinigungsshuttle 23 in einer Parkposition außerhalb der Module 19 aufhalten kann.

Der Halteabschnitt 43 dient dazu, das Führungsseil 27 zu halten, entweder durch Verankerung des freien Endes des Führungsseils 27 oder durch Umlenken des Führungsseils 27. Wenn das Führungsseil 27 nicht endlos ist und somit nach Umlenkung nicht zurück zum anderen Halter 21 geführt wird, wird nach der Umlenkung das freie Ende des Führungsseils 27 entweder ebenfalls am Halteabschnitt 43 oder an einer anderen Stelle des Halters 21 verankert.

Der Steckabschnitt 41 umfasst zwei seitliche Aufsteckabschnitte 41a, die jeweils klauen- oder gabelartig mit einem oberen Teil und einem unteren Teil ausgebildet sind, zwischen denen eines der den Spalt 39 begrenzenden Rahmenteile 18 Platz findet. Zwei sich jeweils zwischen dem oberen Teil und dem unteren Teil eines seitlichen Aufsteckabschnitts 41a erstreckende Abschnitte bilden gemeinsam einen mittleren Einsteckabschnitt 41b, der in den Spalt 39 einsteckbar ist. Im mittleren oberen Bereich des Montageabschnitts 41 ist eine Auflauframpe 47 ausgebildet, die zum Aufnahmeabschnitt 45 führt.

Die unteren Teile der seitlichen Aufsteckabschnitte 41a umfassen jeweils einen Rastabschnitt 41c in Form einer elastisch auslenkbaren Lasche, die in einem zurückgesetzten Bereich an der Oberseite einen von einer Raststruktur 41e gebildeten Rastbereich 41d aufweist. Die Raststruktur 41e umfasst in Querrichtung verlaufende Rippen. Mit diesen Rastabschnitten 41c kann der Steckabschnitt 41 im gesteckten Zustand die Rahmenteile 18 verriegelnd hintergreifen.

Am Aufnahmeabschnitt 45 kann das Reinigungsshuttle 23 nicht nur "geparkt" werden, sondern der Aufnahmeabschnitt 45 dient auch zum Ausrichten des Reinigungsshuttle 23. Hierzu ist der Aufnahmeabschnitt 45 mit einer Ausrichtstruktur 49 versehen. Diese umfasst zwei seitliche Plattformen 49a und zwischen den Plattformen 49a einen Aufnahmeraum 49c. Die Plattformen 49a und der Aufnahmeraum 49c definieren Ausrichtflächen am Halter 21, die mit Gegenflächen des Reinigungsshuttle 23 zusammenwirken können, um hierdurch das Reinigungsshuttle 23 auszurichten, d.h. für eine vorgegebene Ausrichtung des Reinigungsshuttle 23 relativ zum Halter 21 zu sorgen.

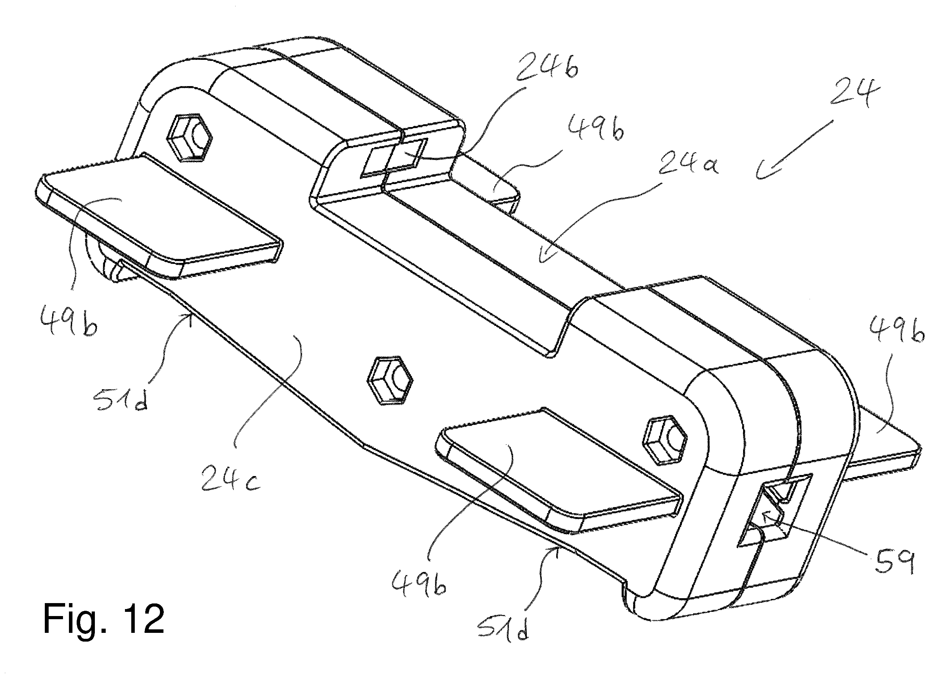

Hierzu wirken die Oberseiten der Plattformen 49a mit Unterseiten von am Läufer 24 ausgebildeten, nach Art von Stummelflügeln seitlich abstehenden Armen 49b (vgl. Fig. 12) zusammen. Für jeden Halter 21 ist am Läufer 24 ein Paar dieser seitlich abstehenden Arme 49b ausgebildet. Der Aufnahmeraum 49c ist an die Endabschnitte, von denen jeweils die Ausrichtarme 49b abstehen, des näherungsweise quaderförmigen Körpers 24c des Läufers 24 angepasst.

Folglich wird das Reinigungsshuttle 23, wenn es mit seinem Läufer 24 über die Auflauframpe 47 in den Aufnahmeabschnitt 45 einfährt, mit den jeweils in Fahrtrichtung vorne liegenden Ausrichtarmen 49b und dem betreffenden Endabschnitt an den Plattformen 49a bzw. den den Aufnahmeraum 49c begrenzenden Flächen ausgerichtet.

Der Halter 21 ist ferner mit einer Halte- und Freigabeeinrichtung 51 für das Reinigungsshuttle 23 versehen, die mit dem Läufer 24 (vgl. Fig. 12) zusammenwirkt.

Im Aufnahmeabschnitt 45 des Halters 21 ist mittig ein schmaler Durchgang 52 ausgebildet, durch den sich ein Steuerhebel 51a dieser Einrichtung 51 hindurch erstreckt und der an einem nicht dargestellten, innerhalb dieses Durchgangs 52 gelegenen Bereich schwenkbar am Halter 21 gelagert ist, und zwar um eine Achse, die senkrecht zur Längserstreckung des Führungsseils 27 verläuft.

Am unteren Ende des Steuerhebels 51a ist eine Steuermasse 51b angeordnet, die dafür sorgt, dass trotz unterschiedlicher Orientierungen des Halters 21 im Raum der Steuerhebel 51a seine Orientierung im Raum beibehält, soweit es seine schwenkbare Aufhängung am Halter 21 gestattet. Ein freies Steuerende 51c des Steuerhebels 51a ragt somit in Abhängigkeit von der Orientierung des Halters 21 im Raum entweder nicht oder mehr oder weniger weit aus dem Durchgang 52 hinaus in den Aufnahmeraum 49c des Aufnahmeabschnitts 45 hinein.

An der Unterseite des Läufers 24 (vgl. Fig. 12) ist an den beiden Endabschnitten jeweils eine Steuerkurve 51d ausgebildet, die mit dem Steuerende 51c des Steuerhebels 51a zusammenwirkt. Dieses Zusammenwirken ist durch die Wahl der Geometrie und der Aufhängung des Steuerhebels 51a sowie der Geometrie der Steuerkurve 51d an der Unterseite des Läufers 24 derart ausgestaltet, dass der Steuerhebel 51a in Abhängigkeit von der Orientierung des Halters 21 im Raum den Läufer 24 und damit das gesamte Reinigungsshuttle 23, wenn es sich in der durch den Aufnahmeabschnitt 45 definierten Parkposition am Halter 21 befindet, entweder hält oder freigibt. Wie im Einleitungsteil erwähnt, ist dabei die Ausgestaltung derart gewählt, dass die Freigabe erst bei Erreichen einer Orientierung des Halters 21 im Raum erfolgt, die dem höchsten Punkt seiner Bewegungsbahn beim Verschwenken der jeweiligen Module 19 entspricht.

Durch diese einfach aufgebaute, rein mechanisch wirksame und automatisch funktionierende Halte- und Freigabeeinrichtung 51 ist auf zuverlässige Weise sichergestellt, dass das Reinigungsshuttle 23 nicht zu früh freigegeben wird und so nach seiner Freigabe schnell eine hohe Geschwindigkeit aufnehmen kann.

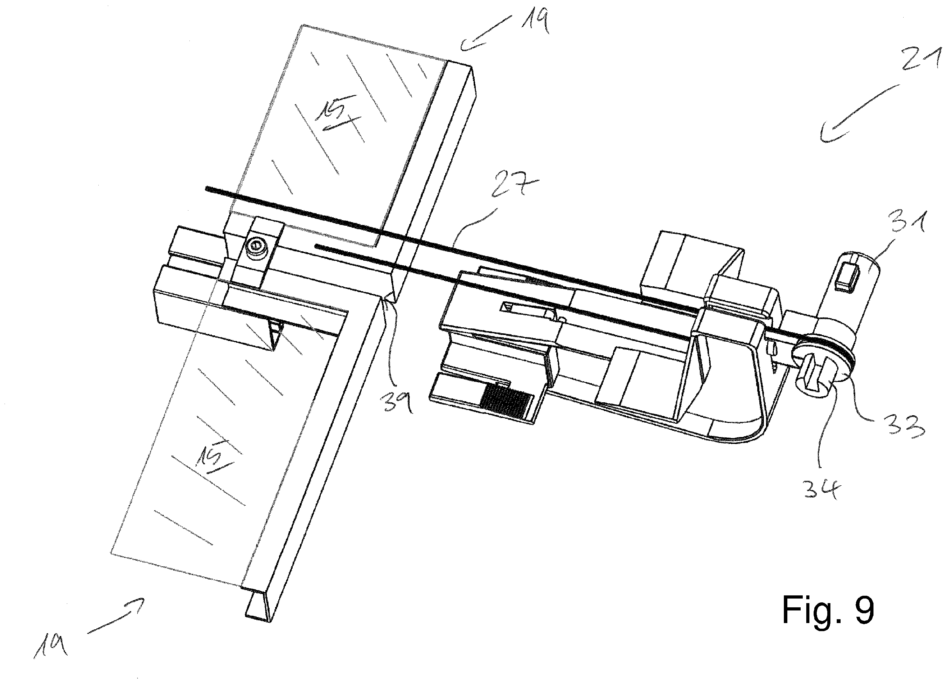

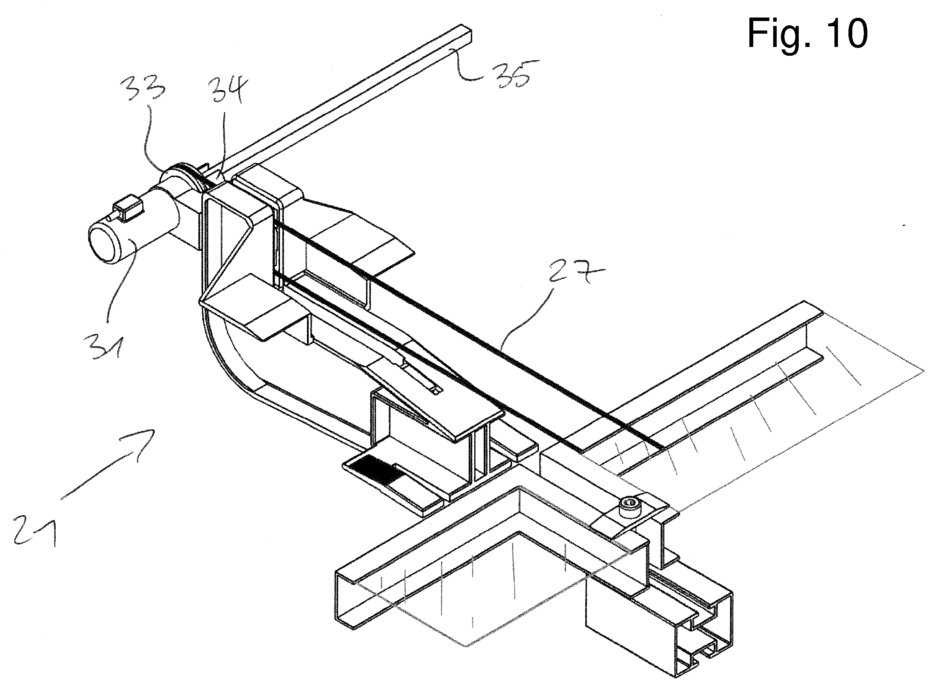

Die Fig. 9 und 10 zeigen ein Ausführungsbeispiel eines erfindungsgemäßen Halters 21, bei dem eine Umlenkrolle 33 für das Führungsseil 37 mit einem motorischen Antrieb 31 versehen ist. Der Antriebsmotor 31 ist auf der einen Seite mit der Umlenkrolle 33 verbunden, die an ihrer anderen Seite einen Kopplungsabschnitt 34 für eine entsprechend mit einem quadratischen Querschnitt versehene Kopplungsstange 35 aufweist (vgl. Fig. 10).

Der andere, hier nicht dargestellte Halter 21 dieser Reinigungsvorrichtung 11 ist mit einer freilaufenden Umlenkrolle versehen, um welche das Führungsseil 27 umgelenkt ist.

Das Führungsseil 27 kann hierbei endlos ausgebildet und das hier nicht dargestellte Reinigungsshuttle über seinen Läufer am Führungsseil 27 befestigt sein, gewissermaßen nach Art von Kabinen einer Seilbahn bzw. Sesseln eines Sesselliftes. Alternativ kann das Führungsseil 27 mit seinen beiden Enden am Läufer des Reinigungsshuttle befestigt sein, wobei die beiden Enden in einer Ebene liegen, in der sich auch das Führungsseil 27 erstreckt, um auf diese Weise das Risiko eines Verdrehens des Läufers und somit eines Schrägstellens des Reinigungsshuttle auf ein Minimum zu reduzieren. Somit ist es möglich, das Reinigungsshuttle 23 mittels des Antriebsmotors 31 über die zu reinigen Moduloberflächen zu ziehen.

Durch diesen motorischen Antrieb ist die Reinigungsvorrichtung grundsätzlich unabhängig von der Schwerkraft und kann somit grundsätzlich auch an nicht verschwenkbaren Modulen oder an Modulen, die entweder verschwenkbar sind oder nicht, aber lediglich eine geringe maximale Neigung aufweisen. Auch ist es möglich, eine Schwerkraftnutzung mit dem motorischen Antrieb 31 zu kombinieren.

Beispielsweise könnte der motorische Antrieb 31 dazu genutzt werden, bei nicht verschwenkbaren, eine ausreichend große Neigung aufweisenden Modulen das Reinigungsshuttle 23 jeweils vom unteren Halter 21 zum oberen Halter 21 zu ziehen und dann das Reinigungsshuttle 23 sich unter dem Einfluss der Schwerkraft bei ausgeschaltetem und ausgekoppelten Antrieb 31 nach unten bewegen zu lassen. Alternativ kann ein in beiden Drehrichtungen betreibbarer Antriebsmotor 31 vorgesehen sein, der das Reinigungsshuttle 23 entgegen der Schwerkraft nach oben und unterstützt von der Schwerkraft nach unten ziehen kann.

Diese Betriebsarten sind sowohl mit einem endlosen Führungsseil 27, an welchem das Reinigungsshuttle befestigt ist, als auch mit einem nicht endlosen Führungsseil 27 möglich, das mit seinen beiden Enden am Reinigungsshuttle befestigt ist.

In dem dargestellten Ausführungsbeispiel der Fig. 9 und 10 verläuft das untere Trum des Führungsseils 27 oberhalb einer durch die Moduloberflächen 15 definierten Ebene. Der Verlauf des Führungsseils 27 kann auch anders gewählt werden. Beispielsweise kann das untere Trum des Führungsseils 27 unterhalb der Module 19 oder innerhalb des Spaltes 39 zwischen den beiden benachbarten Modulen 19 verlaufen.

Mittels einer oder mehrerer Koppelstangen, wie in Fig. 10 gezeigt, ist es möglich, mehrere auf der gleichen Seite der Module 19 nebeneinander angeordnete Halter 21 mechanisch in Reihe zu schalten, so dass ein Antriebsmotor 31 mehrere Umlenkrollen 33 gleichzeitig antreiben kann. Die Umlenkrollen 33 der anderen Halter 21 sind dann auf beiden Seiten mit zu den Kopplungsstangen 35 passenden Kopplungsabschnitten 34 versehen, um Drehmoment vom Antriebsmotor 31 gleichzeitig empfangen und weiter übertragen zu können.

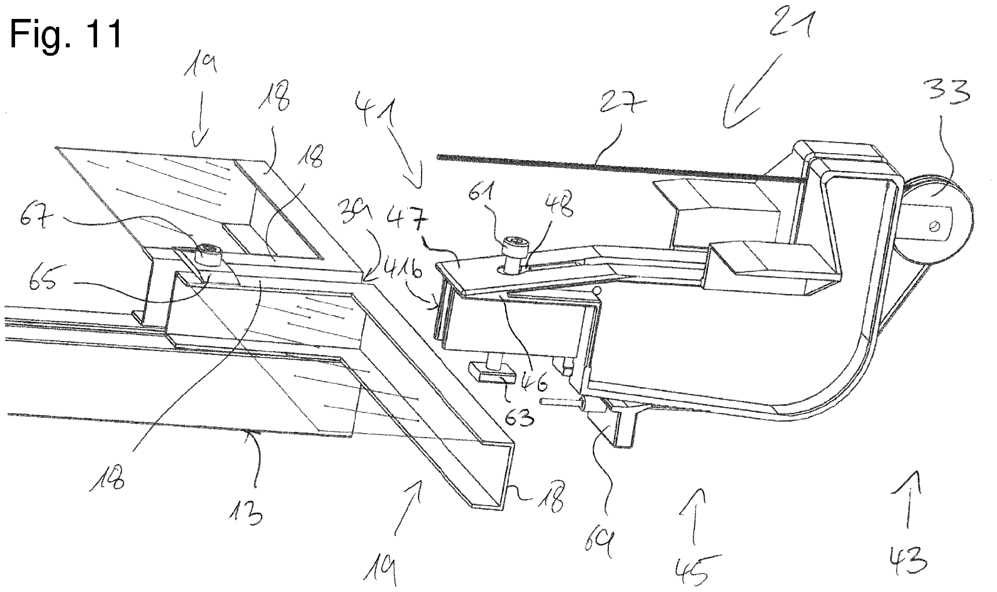

Fig. 11 zeigt ein Ausführungsbeispiel eines Halters 21 einer erfindungsgemäßen Reinigungsvorrichtung, der grundsätzlich hinsichtlich Aufbau und Funktion den vorstehend beschriebenen Haltern 21 entspricht, jedoch einen anders ausgebildeten Montageabschnitt 41 umfasst.

Die Montage des Halters 21 erfolgt hier durch Stecken und Verschrauben. Der Montageabschnitt 41 umfasst - wie bei den anderen zuvor beschriebenen Haltern 21 - einen Einsteckabschnitt 41b zum Einstecken in den Spalt 39 zwischen den beiden benachbarten Modulen 19. Allerdings fehlt es an seitlichen Aufsteckabschnitten und somit an Rastabschnitten zum Verriegeln an den Modulrahmen 18. Stattdessen erstreckt sich durch eine Aussparung 48 im Montageabschnitt 41 hindurch eine Schraube 61, die für eine Fixierung des Halters 21 sorgt, und zwar prinzipiell nach Art der Fixierung der in Längsrichtung verlaufenden Rahmenteile 18 an der Tragkonstruktion 13 mittels der Schraube 67.

Die Schraube 61 des Montageabschnitts 41 ist an ihrem unteren Ende mit einem quaderförmigen Mutterelement 63 versehen, das - wie ein entsprechendes, nicht dargestelltes Mutterelement der Schraube 67 für die Rahmenteile 18 - in eine im Querschnitt T-förmige Nut 14 der Tragkonstruktion (vgl. Fig. 7) eingeschoben wird. Durch Anziehen der Schraube 61 kann dann der Montageabschnitt 41 und somit der Halter 21 insgesamt über einen unterhalb der Auflauframpe 47 befindlichen Klemmabschnitt 46 an den Rahmenteilen 18 fixiert werden. Die Tragkonstruktion 13 und die Rahmenteile 18 sind im montierten Zustand des Halters 21 dann zwischen diesem Klemmabschnitt 46 und dem Mutterelement 63 eingespannt.

Das Führungsseil 27 ist an dem Halter 21 mittels zweier Umlenkrollen umgelenkt, von denen lediglich die obere Umlenkrolle 33 dargestellt ist. Wie vorstehend bei der Erläuterung der verschiedenen möglichen Betriebsarten beschrieben, kann das Führungsseil 27 endlos oder mit seinen beiden Enden am Reinigungsshuttle befestigt sein. Das Untertrum des Führungsseils 27 kann dann unterhalb der Module 19 verlaufen, und zwar beispielsweise seitlich neben der Tragkonstruktion 13. Das Untertrum des Führungsseils 27 verläuft dann außermittig. Für den hierzu erforderlichen Versatz kann durch die Umlenkung des Führungsseils 27 am Halter 21 gesorgt werden.

Alternativ kann sich das Führungsseil 27 durchgehend von dem einen Halter 21 zum anderen, hier nicht dargestellten Halter 21 erstrecken und mit seinen freien Enden jeweils in einem unteren Bereich des Halters 21 verankert sein, im Ausführungsbeispiel der Fig. 11 an einem unteren Verankerungsabschnitt 69.

Fig. 12 zeigt den Läufer 24 des Reinigungsshuttle 23 gemäß einem Ausführungsbeispiel der Erfindung.

Der Läufer 24 besitzt einen Körper 24c mit einer im Wesentlichen quaderförmigen Grundform. An der Unterseite des Körpers 24c sind im Bereich der beiden Endabschnitte die bereits erwähnten Steuerkurven 51d ausgebildet, die mit dem Steuerhebel 51a der Halte- und Freigabeeinrichtung 51 zusammenwirken.

Zum Ausrichten des Läufers 24 und damit des Reinigungsshuttle 23 an einem jeweiligen Halter 21 sind die bereits erwähnten plattenförmigen Arme 49b vorgesehen, deren Unterseiten Gegenflächen sind, die mit den Ausrichtflächen bildenden Oberseiten der Plattformen 49a des Halters 21 ausrichtend zusammenwirken.

Die Oberseite des Läufers 24 dient als Koppelabschnitt 24a und ist mit einer Vertiefung versehen. In den die Vertiefung begrenzenden Wänden sind Rastaufnahmen 24b ausgebildet. Mit einem zu diesem Koppelabschnitt 24a passenden Koppelabschnitt 25a ist der Träger 53 an der Unterseite eines mittig angeordneten Zentralabschnitts 53a versehen (Fig. 13). Über diese Koppelabschnitte 24a, 25a greifen Träger 53 und Läufer 24 im zusammengesetzten Zustand des Reinigungsshuttle 23 formschlüssig ineinander, so dass Träger 53 und Läufer 24 sich nur gemeinsam über die Moduloberflächen 15 bewegen können und somit der Läufer 24 als Mitnehmer für den Träger 53 wirksam ist. Ein unbeabsichtigtes Lösen dieser formschlüssigen Verbindung wird durch Rastelemente 25b verhindert, die am erwähnten Zentralabschnitt 53a des Trägers 53 ausgebildet sind und im verbundenen Zustand in die Rastaufnahmen 24b des Läufers 24 verriegelnd eingreifen.

In Längsrichtung durch den Läufer 24 hindurch erstreckt sich unterhalb des Koppelabschnitts 24a ein Durchgang 59 für das Führungsseil 27.

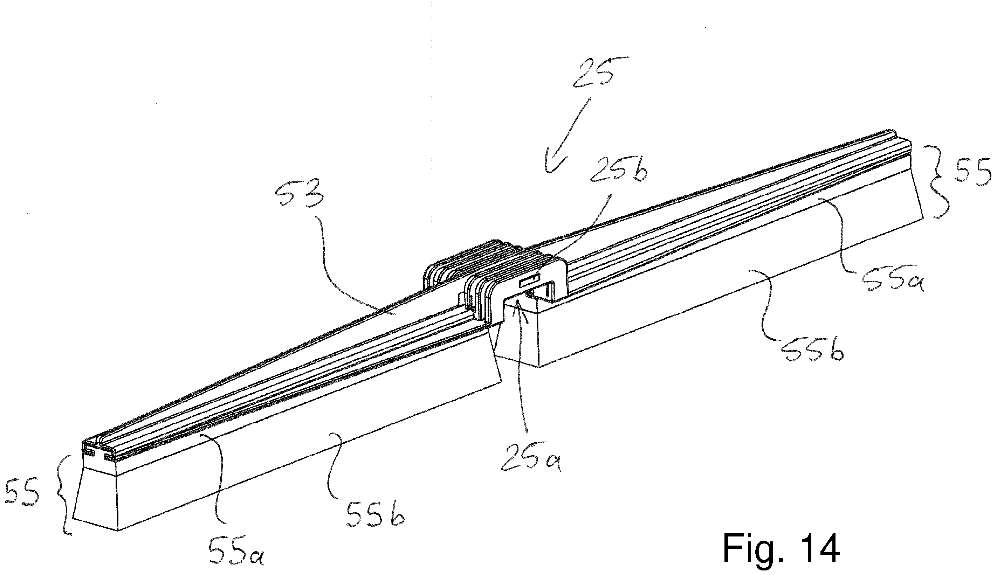

Fig. 14 zeigt das zusammengesetzte Reinigungsorgan 25 mit von außen auf den Träger 53 aufgeschobenen Reinigungselementen 55, die jeweils eine Basis 55a in Form eines Profils z.B. aus Kunststoff oder Metall aufweisen, an deren Unterseite eine Beborstung 55b angebracht ist. An der Oberseite ist das die Basis 55a bildende Profil T-förmig ausgebildet, so dass es in eine entsprechend geformte Nut am Träger 53 eingreifen kann. Auf diese Weise sind die Reinigungselemente 55 sicher am Träger 53 gehalten. Zum Zerlegen des Reinigungsorgans 25 oder zum Auswechseln der Reinigungselemente 55 können diese seitlich nach außen abgezogen werden.

Die Reinigungselemente 55 enden jeweils am Zentralabschnitt 53a des Trägers 53, so dass dieser mit dem Läufer 24 in der vorstehend beschriebenen Art und Weise verbunden werden kann. In diesem Bereich ist folglich zwischen den beiden Beborstungen 55b ein Zwischenraum vorhanden, was aber für die Reinigung unkritisch ist, da sich im montierten Zustand in diesem Bereich die Rahmenteile 18 der beiden benachbarten Module 19 befinden.

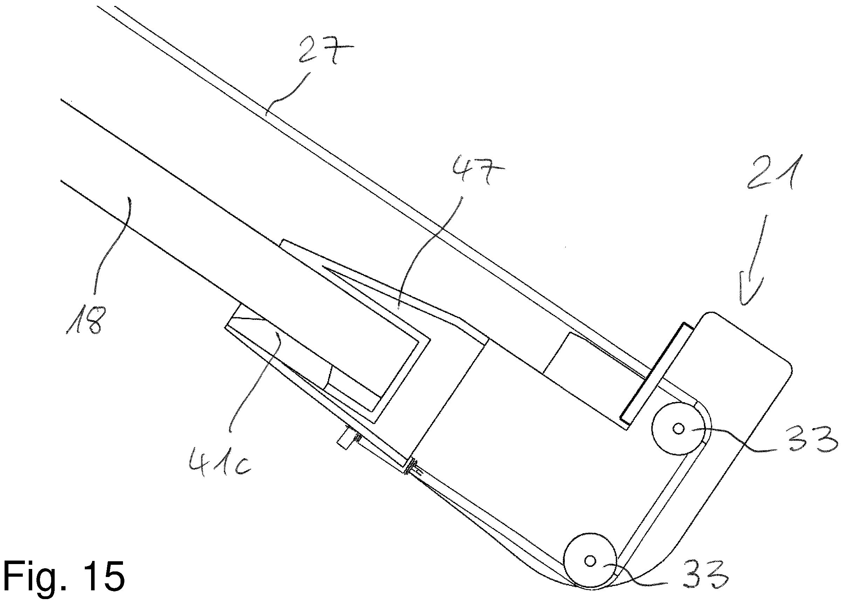

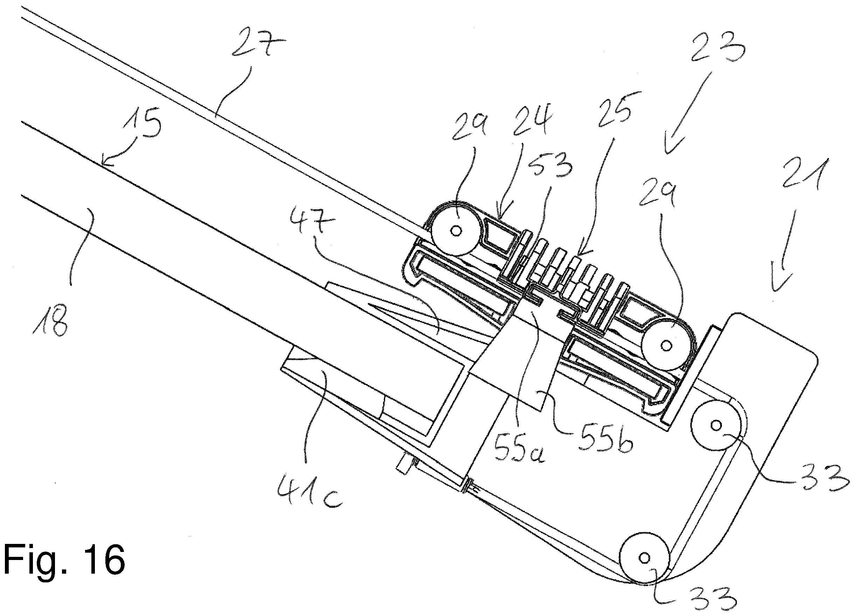

Die Fig. 15 und 16 zeigen ein Ausführungsbeispiel eines erfindungsgemäßen Halters im aufgesteckten Zustand, und zwar in Fig. 15 ohne Reinigungsshuttle und in Fig. 16 mit in der Parkposition befindlichem Reinigungsshuttle 23.

Das Führungsseil 27 ist um zwei Umlenkrollen 33 umgelenkt und mit seinem freien Ende am Halter 21 verankert. Es sind u.a. der das jeweilige Rahmenteil 18 verriegelnd hintergreifende Rastabschnitt 41c und die Auflauframpe 47 dargestellt.

Aus Fig. 16 geht unter anderem hervor, dass der Läufer 24 mit drei Rollelementen 29 versehen ist, wobei zwei Rollelemente 29 oberhalb und ein (nicht dargestelltes, da verdecktes) Rollelement unterhalb des Führungsseils 27 angeordnet sind. Ferner ist zu erkennen, dass das Reinigungsshuttle 23 über den Läufer 24 am Halter 21 in der vorstehend beschriebenen Weise ausgerichtet ist, wobei sich das den Träger 53 und das Reinigungselement 55 aus Basis 55a und Beborstung 55b umfassende Reinigungsorgan 25 in dieser Parkposition außerhalb der Moduloberflächen 15 befindet.

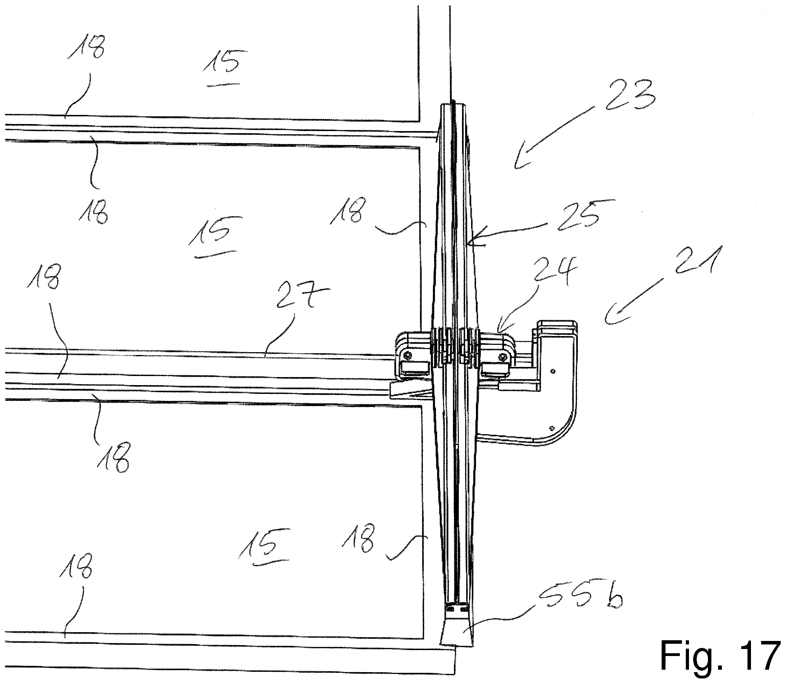

Die gleiche Situation wie in Fig. 16 zeigt die perspektivische Darstellung der Fig. 17.

### Bezugszeichenliste

- 10: Anlage
- 11: Reinigungsvorrichtung
- 13: Tragkonstruktion
- 14: Nut
- 15: Moduloberfläche
- 17: Modulrahmen
- 18: Rahmenteil
- 19: Modul
- 21: Halter
- 23: Reinigungsshuttle
- 24: Läufer
- 24a: Koppelabschnitt
- 24b: Rastaufnahme
- 24c: Körper
- 25: Reinigungsorgan
- 25a: Koppelabschnitt
- 25b: Rastelement
- 27: Führung, Führungsorgan, Seil
- 29: Rollelement
- 31: Antriebsmotor
- 33: Umlenkung, Umlenkrolle
- 34: Kopplungsabschnitt
- 35: Kopplungsstange
- 37: Übergangsbereich
- 39: Spalt
- 41: Montageabschnitt, Steckabschnitt
- 41a: Aufsteckabschnitt
- 41b: Einsteckabschnitt
- 41c: Rastabschnitt
- 41d: Rastbereich
- 41e: Raststruktur
- 43: Halteabschnitt
- 45: Aufnahmeabschnitt
- 46: Klemmabschnitt
- 47: Auflauframpe
- 48: Aussparung
- 49: Ausrichtstruktur
- 49a: Plattform
- 49b: Arm
- 49c: Aufnahmeraum
- 51: Halte- und Freigabeeinrichtung
- 51a: Steuerhebel
- 51b: Steuermasse
- 51c: Steuerende
- 51d: Steuerkurve
- 52: Durchgang
- 53: Träger
- 53a: Zentralabschnitt
- 55: Reinigungselement
- 55a: Basis
- 55b: Beborstung
- 57: Schwenkachse
- 59: Durchgang
- 61: Schraube
- 63: Mutterelement
- 65: Klemmelement
- 67: Schraube
- 69: Verankerungsabschnitt

## Patentansprüche

1. Reinigungsvorrichtung (11) zur Montage an einer Anlage (10) zur Nutzung von Sonnenenergie, insbesondere für eine Solarthermie- oder Photovoltaikanlage, die mehrere über eine gemeinsame Tragkonstruktion (13) zusammenhängende, jeweils eine Moduloberfläche (15) und einen Modulrahmen (17) aufweisende Module (19) umfasst, mit
- zumindest einem Paar separater, insbesondere baugleicher, Halter (21), die einander gegenüberliegend an der Anlage (10) montierbar sind,
- einem im Betrieb zwischen den beiden Haltern (21) pendelnden Reinigungsshuttle (23), das ein quer zur Pendelrichtung langgestrecktes Reinigungsorgan (25) umfasst, und
- einer in Pendelrichtung langgestreckten, im montierten Zustand von den Haltern (21) gehaltenen Führung (27) für das Reinigungsshuttle.

2. Reinigungsvorrichtung nach Anspruch 1,
wobei die Führung zumindest ein, bevorzugt genau ein, langgestrecktes Führungsorgan (27) umfasst, das sich im montierten Zustand durchgehend von dem einen Halter (21) zum anderen Halter (21) erstreckt, wobei sich das Reinigungsshuttle (23) im Betrieb relativ zu dem Führungsorgan (27) bewegt,
insbesondere wobei das Führungsorgan (27) im montierten Zustand zwischen die Halter (21) gespannt ist, insbesondere wobei das Führungsorgan (27) flexibel, bevorzugt ein Seil oder ein Draht, ist, oder wobei das Führungsorgan starr und insbesondere als Stange ausgebildet ist.

3. Reinigungsvorrichtung nach Anspruch 2,
wobei das Reinigungsshuttle (23) im Betrieb entlang des Führungsorgans (27) rollt oder gleitet, insbesondere wobei hierfür das Reinigungsshuttle (23) zumindest ein Roll- oder Gleitelement (29) umfasst,
und/oder wobei das Reinigungsshuttle (23) auf das Führungsorgan (27) auffädelbar ist.

4. Reinigungsvorrichtung nach Anspruch 1,
wobei die Führung zumindest ein Führungsorgan (27) umfasst, das im montierten Zustand an dem Reinigungsshuttle (23) befestigt ist und mit dem das Reinigungsshuttle (23) sich im Betrieb gemeinsam bewegt, insbesondere wobei das Führungsorgan (27) flexibel, vorzugsweise ein Seil oder ein Draht, und an den Haltern (21) umgelenkt ist.

5. Reinigungsvorrichtung nach einem der vorhergehenden Ansprüche, wobei das Reinigungsshuttle (23) dazu ausgebildet ist, sich schwerkraftgetrieben vom momentan oberen Halter (21) zum momentan unteren Halter (21) zu bewegen, insbesondere wobei für das Reinigungsshuttle (23) weder ein externer Antrieb noch ein Eigenantrieb vorgesehen und das Reinigungsshuttle (23) ausschließlich schwerkraftgetrieben bewegbar ist.

6. Reinigungsvorrichtung nach einem der vorhergehenden Ansprüche, wobei zumindest an einem der Halter (21) ein motorischer Antrieb (31) für die Führung (27) vorgesehen ist, insbesondere für eine Umlenkung (33) für ein flexibles Führungsorgan (27) der Führung.

7. Reinigungsvorrichtung nach einem der vorhergehenden Ansprüche, wobei mehrere Paare von Haltern (21) vorgesehen sind, und wobei Halter (21) unterschiedlicher Paare mechanisch, insbesondere mittels einer oder mehrerer Kopplungsstangen (35), in Reihe schaltbar und die Führungen (27) der unterschiedlichen Paare gemeinsam von dem motorischen Antrieb (31) eines der Halter (21) antreibbar sind.

8. Reinigungsvorrichtung nach einem der vorhergehenden Ansprüche, wobei die Halter (21) jeweils einen, insbesondere als Steckabschnitt und/oder Schraubabschnitt ausgebildeten, Montageabschnitt (41) zur Montage an einem Modulrahmen (17) oder gleichzeitig an zwei benachbarten Modulrahmen (17) aufweisen, insbesondere wobei die Halter (21) jeweils durch werkzeugloses und befestigungsmittelfreies Stecken oder durch Verschrauben, bevorzugt nach vorherigem Stecken, montierbar sind, und/oder wobei die Halter (21) jeweils einen Montageabschnitt (41) aufweisen, der zwei seitliche Aufsteckabschnitte (41a) zum Aufstecken auf zwei benachbarte Modulrahmen (17) und einen mittleren, zwischen den Aufsteckabschnitten (41a) befindlichen Einsteckabschnitt (41b) zum Einstecken in einen zwischen den beiden benachbarten Modulrahmen (17) vorhandenen Spalt (39) umfasst, insbesondere wobei die seitlichen Aufsteckabschnitte (41a) jeweils einen Rastabschnitt (41c) zum Verrasten mit dem jeweiligen Modulrahmen (17) aufweisen.

9. Reinigungsvorrichtung nach einem der vorhergehenden Ansprüche, wobei die Halter (21) jeweils einen, insbesondere als Steckabschnitt und/oder Schraubabschnitt, ausgebildeten Montageabschnitt (41), einen Halteabschnitt (43) für die Führung (27) und einen, bevorzugt zwischen Montageabschnitt (41) und Halteabschnitt (43) befindlichen, Aufnahmeabschnitt (45) zum Parken des Reinigungsshuttle (23) in einer Parkposition aufweisen,
insbesondere wobei der Aufnahmeabschnitt (45) eine Ausrichtstruktur (49) mit Ausrichtflächen aufweist, die beim Einfahren des Reinigungsshuttle (23) in den Aufnahmeabschnitt (45) durch Zusammenwirken mit Gegenflächen des Reinigungsshuttle (23) für eine vorgegebene Ausrichtung des Reinigungsshuttle (23) relativ zum Halter (21) sorgen, insbesondere wobei die Ausrichtstruktur (49) zwei seitliche Plattformen (49a) für am Reinigungsshuttle (23) ausgebildete, seitlich abstehende Arme (49b) und zwischen den Plattformen (49a) einen Aufnahmeraum (49c) für das Reinigungsshuttle (23) umfasst.

10. Reinigungsvorrichtung nach einem der vorhergehenden Ansprüche, wobei die Halter (21) jeweils eine schwerkraftgesteuerte, insbesondere rein mechanisch wirksame, Halte- und Freigabeeinrichtung (51) für das Reinigungsshuttle (23) aufweisen, insbesondere wobei die Halte- und Freigabeeinrichtung (51) einen beweglich am jeweiligen Halter (21) gelagerten Steuerhebel (51a) aufweist, der an dem einem Ende eine Steuermasse (51b) trägt und mit dem anderen Ende (51c) mit einer am Reinigungsshuttle (23) ausgebildeten Steuerkurve (51d) zusammenwirkt, wobei die Halte- und Freigabeeinrichtung (51) in Abhängigkeit von der Orientierung des Halters (21) im Raum das in einer Parkposition am Halter (21) befindliche Reinigungsshuttle (23) entweder hält oder freigibt.

11. Reinigungsvorrichtung nach einem der vorhergehenden Ansprüche, wobei die Halter (21) jeweils einstückig ausgebildet sind, insbesondere wobei die Halter (21) jeweils aus Kunststoff bestehen und bevorzugt als Kunststoffspritzgussteil ausgebildet sind.

12. Reinigungsvorrichtung nach einem der vorhergehenden Ansprüche, wobei das Reinigungsshuttle (23) einen von dem Reinigungsorgan (25) separaten, mit der Führung (27) zusammenwirkenden Läufer (24) umfasst, insbesondere wobei das Reinigungsorgan (25) lösbar mit dem Läufer (24) koppelbar ist, bevorzugt durch eine Rast- oder Schnappverbindung (24b, 25b), insbesondere wobei der Läufer (24) bezüglich der Längserstreckung des Reinigungsorgans (25) mittig angeordnet ist und das Reinigungsorgan (25) zu beiden Seiten des Läufers (24) jeweils um ein Mehrfaches der in Längserstreckung des Reinigungsorgans (25) gemessenen Breite des Läufers (24) von diesem auskragt.

13. Reinigungsvorrichtung nach Anspruch 12,
wobei das Reinigungsorgan (25) einen mit dem Läufer (24) koppelbaren Träger (53) und zumindest ein am Träger (53) angebrachtes Reinigungselement (55), insbesondere eine Bürstenleiste, umfasst, insbesondere wobei ein durchgehendes Reinigungselement oder zwei jeweils am Läufer (24) endende Reinigungselemente (55) vorgesehen sind.

14. Anlage (10) zur Nutzung von Sonnenenergie, insbesondere Solarthermie- oder Photovoltaikanlage, mit mehreren über eine gemeinsame Tragkonstruktion (13) zusammenhängenden Modulen (19), die jeweils eine Moduloberfläche (15) und einen Modulrahmen (17) aufweisen, und mit einer oder mehreren Reinigungsvorrichtungen (11) nach einem der vorhergehenden Ansprüche.

15. Anlage nach Anspruch 14,
wobei die Halter (21) einer jeweiligen Reinigungsvorrichtung (11) jeweils an einem von zwei einander gegenüberliegenden Rahmenteilen (18) eines Modulrahmens (17) oder an einem von zwei einander gegenüberliegenden Übergangsbereichen (37) zwischen zwei benachbarten Modulrahmen (17) montiert sind, insbesondere wobei die Halter (21) jeweils mit dem Rahmenteil oder den Rahmenteilen werkzeuglos und befestigungsmittelfrei gesteckt und/oder verschraubt sind,
und/oder wobei die Halter (21) einer jeweiligen Reinigungsvorrichtung (11) jeweils an einem von zwei einander gegenüberliegenden Übergangsbereichen (37) zwischen zwei benachbarten Modulrahmen (17) montiert sind und das Reinigungsshuttle (23) sich mit dem Reinigungsorgan (25) teilweise oder vollständig über die beiden benachbarten Moduloberflächen (15) erstreckt,
und/oder wobei die Halter (21) einer jeweiligen Reinigungsvorrichtung (11) jeweils auf einen Modulrahmen (17) oder jeweils gleichzeitig auf zwei benachbarte Modulrahmen (17) aufgesteckt sind, insbesondere jeweils von außen in einer parallel zu den Moduloberflächen verlaufenden Steckrichtung, insbesondere wobei die Halter (21) jeweils zusätzlich in einen zwischen zwei benachbarten Modulrahmen (17) vorhandenen Spalt (39) eingesteckt sind,
und/oder wobei an jedem zweiten Übergang zwischen zwei benachbarten Modulen (19) eine Reinigungsvorrichtung (11) montiert ist, deren Reinigungsorgan (25) sich vollständig über die beiden benachbarten Moduloberflächen (15) erstreckt, oder wobei an jedem Übergang zwischen zwei benachbarten Modulen (19) eine Reinigungsvorrichtung (11) montiert ist, deren Reinigungsorgan (25) sich jeweils zur Hälfte über die beiden benachbarten Moduloberflächen (15) erstreckt,
und/oder wobei die Halter (21) einer jeweiligen Reinigungsvorrichtung (11) jeweils einen Aufnahmeabschnitt (45) zum Parken des Reinigungsshuttle (23) in einer Parkposition aufweisen, und wobei im montierten Zustand das am Aufnahmeabschnitt (45) geparkte Reinigungsshuttle (23) sich mit dem Reinigungsorgan (25) außerhalb der Moduloberflächen (15) und/oder mit einer Arbeitsseite des Reinigungsorgans (25) in einer Ebene oberhalb der Moduloberflächen (15) befindet,
und/oder wobei die Führung zumindest ein langgestrecktes flexibles Führungsorgan (27) umfasst, insbesondere ein Seil oder einen Draht, das oberhalb der Moduloberflächen (15) mit dem Reinigungsshuttle (23) zusammenwirkt und das an beiden Haltern (21) umgelenkt ist und sich oberhalb oder unterhalb der Module (19) oder in einem Spalt (39) zwischen zwei benachbarten Modulen (19) zwischen den Haltern (21) erstreckt, insbesondere wobei das Führungsorgan (27) endlos ist oder mit beiden Enden am Reinigungsshuttle (23) befestigt ist,
und/oder wobei im Betrieb das Reinigungsshuttle (23) einer jeweiligen Reinigungsvorrichtung (11) ausschließlich mit dem Reinigungsorgan (25) die Moduloberflächen (15) berührt,
und/oder wobei die Module (19) schwenkbar sind und das Reinigungsshuttle (23) einer jeweiligen Reinigungsvorrichtung (11) dazu ausgebildet ist, sich schwerkraftgetrieben vom momentan oberen Halter (21) zum momentan unteren Halter (21) zu bewegen, insbesondere wobei für das Reinigungsshuttle (23) weder ein externer Antrieb noch ein Eigenantrieb vorgesehen und das Reinigungsshuttle (23) ausschließlich schwerkraftgetrieben bewegbar ist,
und/oder wobei die Halter (21) einer jeweiligen Reinigungsvorrichtung (11) jeweils eine schwerkraftgesteuerte Halte- und Freigabeeinrichtung (51) für das Reinigungsshuttle (23) aufweisen, die in Abhängigkeit von der Orientierung des Halters (21) im Raum das in einer Parkposition am Halter (21) befindliche Reinigungsshuttle (23) entweder hält oder freigibt, insbesondere wobei eine Freigabe erst bei Erreichen einer Orientierung des Halters (21) im Raum erfolgt, die dem höchsten Punkt der Bewegungsbahn des Halters (21) beim Verschwenken des Moduls (19) entspricht,
und/oder wobei mehrere Reinigungsvorrichtungen (11) für mehrere eine Modulreihe bildende Module (19) vorgesehen sind, und wobei auf der gleichen Seite angeordnete Halter (21) unterschiedlicher Reinigungsvorrichtungen (11) mechanisch, insbesondere mittels zumindest einer Kopplungsstange (35), in Reihe geschaltet und die Führungen (27) der unterschiedlichen Reinigungsvorrichtungen (11) gemeinsam von einem motorischen Antrieb (31) antreibbar sind, der an einem der Halter (21) vorgesehen ist und durch die mechanische Reihenschaltung seine Antriebsbewegung an die anderen Halter (21) überträgt.
